(19) Europäisches Patentamt

European Patent Office

Office européen des brevets

(11) EP 1 710 954 A1

(12) EUROPEAN PATENT APPLICATION
published in accordance with Art. 158(3) EPC

(43) Date of publication:
11.10.2006 Bulletin 2006/41

(51) Int Cl.:
$H04L\ 9/32^{(2006.01)}$    $G09C\ 1/00^{(2006.01)}$

(21) Application number: 05704230.1

(22) Date of filing: 21.01.2005

(86) International application number:
PCT/JP2005/001177

(87) International publication number:
WO 2005/071880 (04.08.2005 Gazette 2005/31)

(84) Designated Contracting States:
CH DE FR GB LI

(30) Priority: 23.01.2004 JP 2004016006

(71) Applicant: Ueki, Makoto
c/o Nec Corporation
Minato-ku, Tokyo 108-8001 (JP)

(72) Inventors:
• Yonezawa, Shoko,
NEC Corporation
Tokyo 1088001 (JP)

• Furukawa, Jun,
NEC Corporation
Tokyo 1088001 (JP)

(74) Representative: Betten, Jürgen et al
Patentanwälte Betten & Resch,
Theatinerstrasse 8
80333 München (DE)

(54) GROUP SIGNATURE SYSTEM, METHOD, DEVICE, AND PROGRAM

(57) A signature device 2 creates encrypted data by encrypting a first element of a member certificate through use of a first random number and public information disclosed by said group management device 1. The signature device 2 also creates first and second converted data by converting the first element through use of a random number and public information. The signature device 2 further creates knowledge signature data from which information concerning the first element, the second element, and the signature key will not be divulged, and outputs a group signature which contains the knowledge signature data together with a message. A verification device 3 verifies whether a group signature has been created by using a member certificate of one of the registered members in the group and a signature key, based on the message, the group signature, and the public information.

FIG. 1

**Description**

Field of the Invention

The present invention relates to a group signature system that allows any member belonging to a certain group to create or verify a signature proving that the signer is really a member of that group. More particularly, the invention relates to a group signature system with a function to distribute the group administrator's process privileges among two or more members.

Description of the Related Art

This type of group signature system is conventionally designed to allow a user, who belongs to a group consisting of a plurality of members, to create or verify a signature. This signature is generated in such a manner that a verifier can confirm that the signer is one of the members of this group but does not know which individual in the group signed the document. To deal with possible emergency situations, a group signature system has a function to identify the signer from a given signature when necessary (hereinafter referred to as "tracking").

In a typical group signature system, an entity called the group administrator exists, who is responsible for registration of new members into the group and for tracking of signers. Registration of group members and tracking of signers for group signatures in the group signature system are always performed under the privileges of the group administrator. Granting all the privileges to the group administrator, however, may not be appropriate for reasons of system security.

If the group administrator attempts to commit fraud, this group signature system will not be able to prevent it. For example, the group administrator can add an individual to the group for fraud purposes and have that member create a signature whose signer is not identifiable.

One viable method of minimizing the possibilities of such fraud and improving the reliability of the group signature system is to assign the roles of group administrator to more than one entity, rather than granting the entire authority to a single individual serving as the group administrator.

As a way of realizing this in a conventional group signature system, it is proposed to divide the functions of the group administrator into two: member administrator, who is authorized to register a new user into the group, and member tracker, who is authorized to identify the signer of a group signature. The group signature systems described in Literature 1 and Literature 2 are capable of such division of the group administrator.

This system further improves the reliability of the member administrator and member tracker by providing a means to distribute their respective privileges among a plurality of entities, so that multiple member administrators or multiple member trackers may work together to accomplish their respective functions.

In the first prior art, proposed in G. Ateniese and R. de Medeiros, "Efficient Group Signatures without Trapdoors," In Advances in Cryptology---ASIACRYPT 2003, LNCS 2894, pp.246-268, Springer-Verlag, 2003 (hereinafter referred to as "Literature 1"), public keys and private keys used by the member administrator are selected from a cryptosystem based on the discrete logarithm problems for a multiplicative group on a finite field, as described in ElGamal, "A Public Key Cryptosystem and a Signature Scheme Based on Discrete Logarithms" (IEEE Trans. on Information Theory, IT-31,4, pp.469-472). In the second prior art, proposed in G. Ateniese, J. Camenisch, M. Joye and G. Tsudik, "A Practical and Provable Secure Coalition-Resistant Group Signature Scheme," In Advances in Cryptology--CRYPTO2000, LNCS 1880, pp.255-270, Springer-Verlag, 2000 (hereinafter referred to as "Literature 2"), public keys and private keys used by the member administrator are selected based on a cryptosystem, such as RSA encryption ("A Method for Obtaining Digital Signatures and Public-Key Cryptosystems," Communications of the ACM, Vol.21, No.2, pp.120-126).

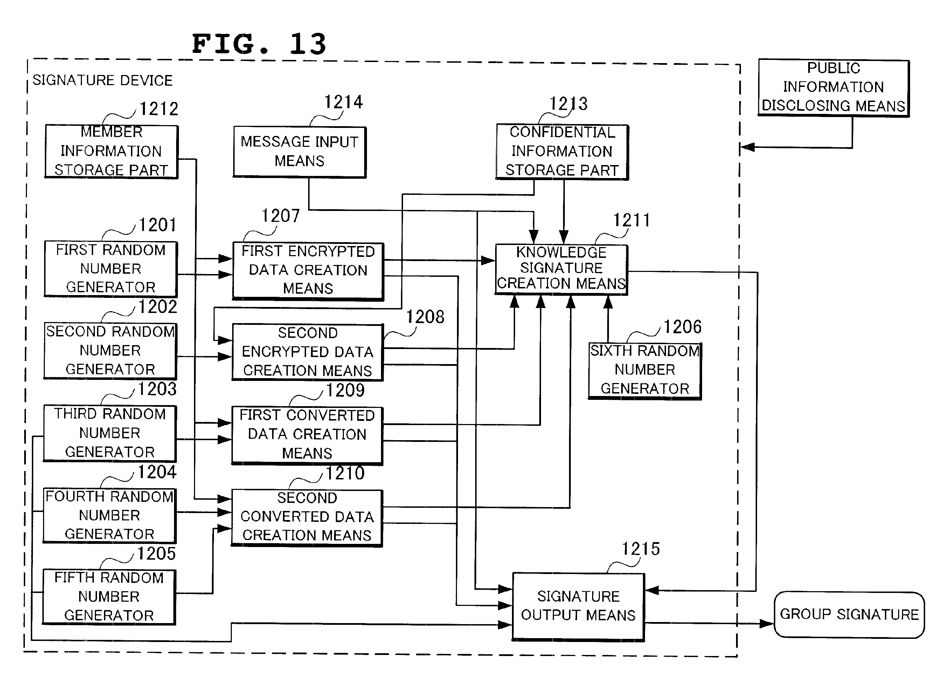

The group signature system according to the first prior art described in Literature 1 has a public information disclosing means and a signature device. Fig. 13 is a block diagram showing the configuration of a signature device in the group signature system according to the first prior art. With reference to Fig. 13, the signature device comprises a first random number generator 1201, a second random number generator 1202, a third random number generator 1203, a fourth random number generator 1204, a fifth random number generator 1205, a sixth random number generator 1206, a first encrypted data creation means 1207, a second encrypted data creation means 1208, a first converted data creation means 1209, a second converted data creation means 1210, a knowledge signature creation means 1211, a confidential information storage part 1212, a member information storage part 1213, a message input means 1214, and a signature output means 1215.

The first random number generator 1201 generates a random number for use by the first encrypted data creation means 1207.

The second random number generator 1202 generates a random number for use by the second encrypted data creation means 1208.

The third random number generator 1203 generates a random number for use by the first converted data creation means 1209 and outputs the random number to the signature output means 1215 for use as an element of a group signature.

The fourth random number generator 1204 generates a random number for use by the second converted data creation means 1210 and outputs the random number to the signature output means 1215 for use as an element of a group signature.

The fifth random number generator 1205 generates a random number for use by the second converted data creation means 1210 and outputs the random number to the signature output means 1215 for use as an element of a group signature.

The sixth random number generator 1206 generates a random number for use by the knowledge signature creation means 1211.

The first encrypted data creation means 1207 uses as input the random number generated by the first random number generator 1201 and the first element of a member certificate stored in the member information storage part 1212, to output encrypted data for the first element of the member certificate (hereinafter referred to as the "first encrypted data") to the knowledge signature creation means 1211 and the signature output means 1215.

The second encrypted data creation means 1208 uses as input the random number generated by the second random number generator 1202 and the converted data from a signature key stored in the confidential information storage part 1213, to output the encrypted data from the first element of the signature key's converted data to the knowledge signature creation means 911 (*1211?) and the signature output means 1215.

The first converted data creation means 1209 uses as input the random number generated by the third random number generator 1203 and the first element of a member certificate stored in the member information storage part 1212, to output converted data from the first element of the member certificate (hereinafter referred to as the "first converted data") to the knowledge signature creation means 1211 and the signature output means 1215.

The second converted data creation means 1210 uses as input the random number generated by the fourth and fifth random number generators 1204 and 1205 and the first element of a member certificate stored in the member information storage part 1212, to output the converted data from the first element of the member certificate (hereinafter referred to as the "second converted data") to the knowledge signature creation means 1211 and the signature output means 1215.

The knowledge signature creation means 1211 uses as input the message inputted from by the message input means 1214, the random number generated by the sixth random number generator 1206, the first and second encrypted data, the first and second converted data, the first and second elements of the member certificate and the signature key, to output the knowledge signature data that can prove that the signer duly owns the member certificate and signature key without leaking information concerning the member certificate and signature key.

The member information storage part 1212 stores a member certificate for use in issuing a group signature. A member certificate consists of a first element and a second element.

The confidential information storage part 1213 stores a signature key.

The message input means 1214 inputs a message to which a signature will be added.

The signature output means 1215 outputs as a group signature the message, the first and second encrypted data, the first and second converted data, the third, fourth and fifth random numbers, and the knowledge signature data.

Using the configuration described above, the group signature system according to the first prior art can create a group signature.

The group signature system described in Literature 2 according to the second prior art has a group management device and a signature device.

The group management device has a public information disclosing means, a member information disclosing means, an RSA key generation means, discrete logarithm key generation means, a member registration confidential information storage part, a member tracking confidential information storage part, and a member registration means. The group management device performs the process of registering a group member and the process of identifying the actual signer from a given signature.

The public information disclosing means discloses public information used in the system to all the devices.

The member information disclosing means discloses information concerning the signature device acquired by the member registration means.

The RSA key generation means creates a public key and a private key using a method based on an RSA cryptosystem, outputs the public key to the public information disclosing means and the private key to the member registration confidential information storage part.

The discrete logarithm key generation means creates a public key and a private key from a cryptosystem based on a discrete logarithm problem. It then outputs the public key to the public information disclosing means and the private key to the member tracking confidential information storage part.

The member registration confidential information storage part stores the private key created by the RSA key generation means.

The member tracking confidential information storage part stores the private key created by the discrete logarithm key generation means.

The member registration means uses as input the private key stored in the member registration confidential information storage part, to output a member certificate necessary for the creation of a group signature to the signature device.

The signature device in turn creates a group signature using the member certificate acquired from the group management device.

The group management device according to the second prior art may be divided into two, member management device and member tracking device. In this case, the member management device needs to have an RSA key generation means, a member registration confidential information storage part, and a member registration means, while the member tracking device needs to have a discrete logarithm key generation means and a member tracking confidential information storage part.

The first problem with the first prior art is that if the group management device is divided into member management device and member tracking device, the member management device will have a function to identify the actual signer.

In the first prior art, the first converted data created by the first converted data creation means 1209 is a definite value dependent on the random number generated by the third random number generator 1203 (hereinafter referred to as the "third random number") and the first element of the member certificate. The third random number is publicized later as an element of the group signature. This means that the member management device can identify the signer by first performing the same conversion as the first converted data creation means 1209 on all the disclosed member certificates on a round-robin basis, using as input information of all the disclosed member certificates and the third random number disclosed as an element of group signatures, and then figuring out the owner of the member certificate that matches the first converted data contained in the group signature which was outputted from the signature device.

The second problem with the second prior art is that if the member management device's process privileges are distributed among a plurality of entities, these entities will receive large loads, leading to a significant reduction in efficiency.

The second prior art selects a private key for use by the member management device based on an RSA cryptosystem. Distributed computation of RSA cryptosystems is known to be generally complex and hefty. It would be problematic if the loads generated by this large computational amount are applied to multiple entities.

One object of the present invention is to provide a secure group signature system in which the content of a member certificate will not be divulged to any third party. Another object of the present invention is to provide a group signature system that can ensure safe and reliable division of the group management device's functions into two, member management device and member tracking device, and that can efficiently distribute the functions of the member management device and the member tracking device among a plurality of entities.

SUMMARY OF THE INVENTION

In order to achieve the above-described objects, the group signature system of the invention creates a group signature proving that the signer is a member duly registered into the group; verifies whether the signer of the group signature thus created is really a member of said group; and comprises
a group management device that discloses public information for common use throughout the system in a referenceable manner from other devices,
a signature device that stores a member certificate containing a first element and a second element; creates encrypted data by encrypting said first element through use of a first random number and said public information disclosed by the group management device; creates first converted data by converting said first element through use of a second random number and the public information; creates second converted data by converting the first element through use of a third random number and the public information; creates knowledge signature data from a message to which a signature will be added, a fourth random number, said encrypted data, said first converted data, said second converted data, a signature key which is a private key to be used for the creation of a signature, said first element, and said second element; and outputs as a group signature said encrypted data, said first converted data, said second converted data, and said knowledge signature data, together with said message; and
a verification device that verifies whether said group signature has duly been created by using the first and second elements contained in the member certificate of one of the registered members in said group and said signature key, based on said message and said group signature outputted from said signature device and said public information disclosed by said group management device.

Said signature device may create said knowledge signature data in such a manner that it can be proved that said encrypted data, said first converted data, and said second converted data have been created from the same value and that information concerning said first element, said second element, and said signature key will not be divulged; and

said verification device may verify whether said group signature has been created by using the first and second elements contained in the member certificate of one of the registered members in said group and said signature key, without using information concerning said first element, said second element, and said signature key.

The group signature system of the invention may further have a member management device which, when registering a new member into said group, selects a member registration private key so that the key will be a generator of a finite field having the order of a prime number; uses a discrete logarithm as said member registration private key; obtains a member registration public key, which is a generator of a multiplicative group on a finite field, from said member registration private key; notifies said member registration public key as public information to said group management device; stores said member registration private key in itself; and creates a member certificate using such member registration private key and notifies it to said signature device.

Said member certificate may be a Nyberg-Rueppel signature which uses said signature key as a discrete logarithm and that is created by using said member registration private key on the converted data from said signature key.

Said group management device may, in addition to said public information, disclose said member information notified from said member management device in a referenceable manner from other devices.

The system of the present invention may further have a plurality of member sub-management devices which, when registering a new member into said group, assigns one of the distributed values for obtaining the required generator of a finite field having the order of a prime number as its own distributed member registration private key; stores said member registration private key in itself; and uses as a member registration public key the value having said generator as a discrete logarithm.

Said signature device acquires a member certificate by communicating with a plurality of said member sub-management devices, and
said group management device may acquire said member registration public key.

The system of the present invention further has a member tracking device that selects a member tracking private key so that the key will be a generator of a finite field having the order of a prime number; uses a discrete logarithm as said member tracking private key; obtains a member tracking public key that is a generator of a multiplicative group on a finite field from said member tracking private key; notifies said member tracking public key as said public information to said group management device; stores said member tracking private key in itself; during the process of identifying the signer of a group signature, decrypts the encrypted data contained in said group signature by using said member tracking private key; and, if the result of decryption matches the first element of one of said member certificates that have been disclosed by said group management device, identifies the member of such member certificate as the signer; and
said group management device may have disclosed said member certificate as said member information; and
said signature device, when creating said encrypted data by encrypting said first element, may use said member tracking public key as said public information.

The system of the present invention further has a plurality of member sub-tracking devices, wherein the distributed member tracking private key for each member sub-tracking device is the one to be assigned to itself, among the distributed values for obtaining the generator of a finite field having the order of a prime number; and that each obtains said distributed member tracking private key so that the member tracking public key has a discrete logarithm as the generator of said finite field and will be a generator of a multiplicative group on a finite field; and that each store said distributed member tracking private key in itself;
said signature device, when creating said encrypted data by encrypting said first element, may use said member tracking public key as said public information;
said group management device may have disclosed said member certificate as said member information; and
during the process of identifying the signer of a group signature, each of said member sub-tracking devices may identify the member of one of said member certificates as the signer, if the decryption result obtained from the result of performing a pre-determined calculation on the encrypted data contained in said member group signature by using each of their said distributed member tracking private keys matches the first element of one of said member certificates that have been disclosed by said group management device.

A finite field on an elliptic curve may be used instead of said multiplicative group on a finite field.

Thus, according to the present invention, the signature device can safeguard information concerning a member certificate by using a random number that will not be disclosed as an element of a group signature. The functions of the member management device are distributed among a plurality of member sub-management devices, and a private key used by the plurality of member sub-management devices to calculate a member certificate is selected from a cryptosystem based on a discrete logarithm problem. The functions of the member tracking device are distributed among a plurality of member sub-tracking devices, and a private key used by the plurality of member sub-tracking devices to identify the signer is selected from a cryptosystem based on a discrete logarithm problem.

BRIEF DESCRIPTION OF DRAWINGS

Fig. 1 is a block diagram showing an example configuration of a group signature system according to the first embodiment of the present invention;

Fig. 2 is a block diagram showing another example configuration of a group signature system according to the first embodiment of the present invention;

Fig. 3 is a block diagram showing yet another example configuration of a group signature system according to the first embodiment of the present invention;

Fig. 4 is a diagram showing the relationship among the blocks forming a signature device according to the first embodiment of the present invention;

Fig. 5 is a diagram showing the relationship among the blocks comprising a signature device and the blocks comprising a member management device according to the first embodiment of the present invention;

Fig. 6 is a diagram showing the relationship between the block within a verification device and another device according to the first embodiment of the present invention;

Fig. 7 is a diagram showing the relationship between blocks comprising a member management device according to the first embodiment of the present invention;

Fig. 8 is a diagram showing the relationship among the blocks comprising a member tracking device according to the first embodiment of the present invention;

Fig. 9 is a diagram showing the relationship among the blocks comprising a member tracking device according to the first embodiment of the present invention;

Fig. 10 is a flow chart showing the operation of the group signature system of first embodiment according to the present invention when registering a member;

Fig. 11 is a flow chart showing the operation of the signature device of first embodiment according to the present invention when creating a group signature;

Fig. 12 is a block diagram showing an example configuration of a group signature system according to the second embodiment of the present invention; and

Fig. 13 is a block diagram showing the configuration of a signature apparatus in the group signature system of the first conventional art.

DESCRIPTION OF THE PREFERRED EMBODIMENT

The preferred embodiment of the present invention will now be described in detail by referring to the drawings.

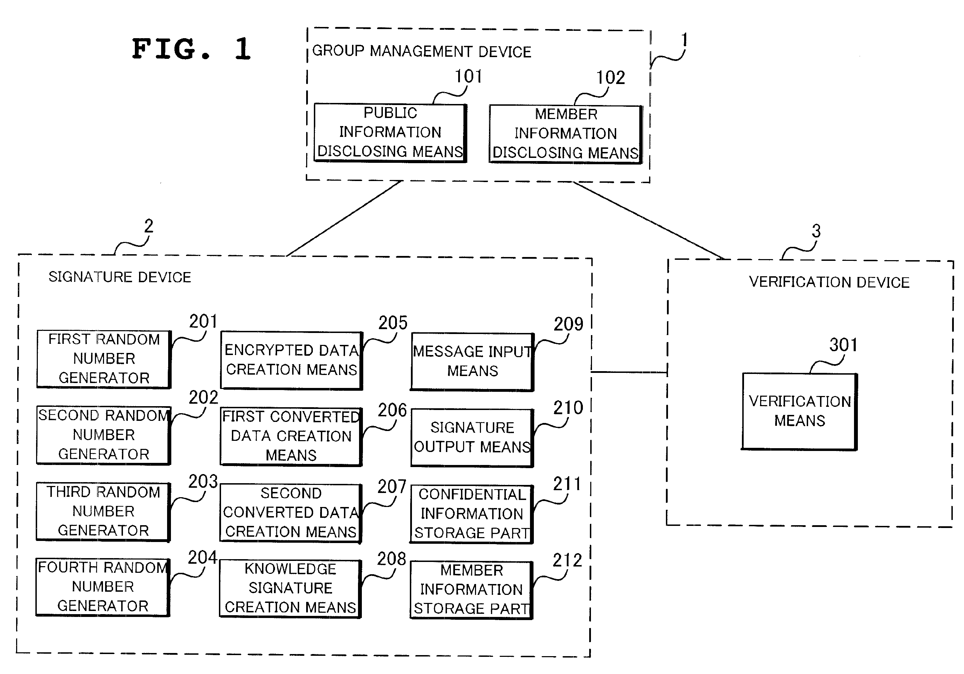

Fig. 1 is a block diagram showing an example configuration of a group signature system according to the first embodiment of the present invention. With reference to Fig. 1, the group signature system of the first embodiment has a group management device 1, a signature device 2, and a verification device 3.

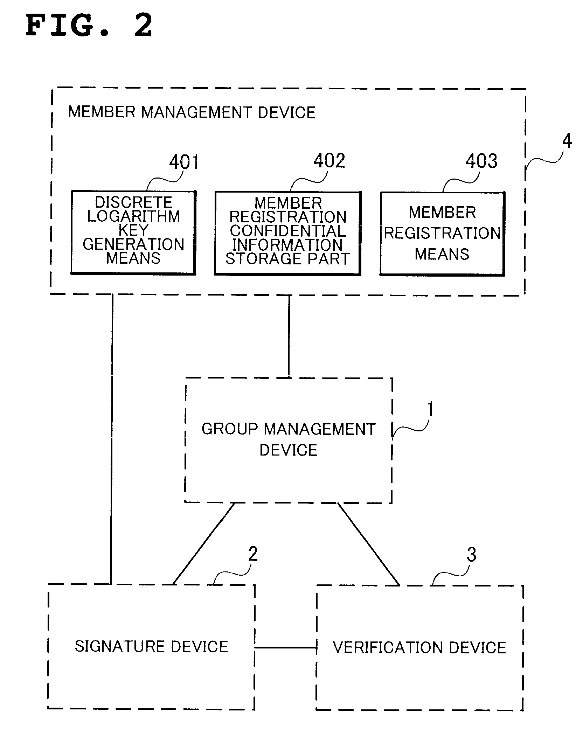

In another example configuration, the group signature system of the first embodiment may have a member management device in addition to the configuration in Fig. 1. Fig. 2 is a block diagram showing another example configuration of a group signature system according to the first embodiment of the present invention. With reference to Fig. 2, the group signature system of the first embodiment has, in addition to the configuration in Fig. 1, a member management device 4, wherein the member registration functions of the group management device 1 are divided.

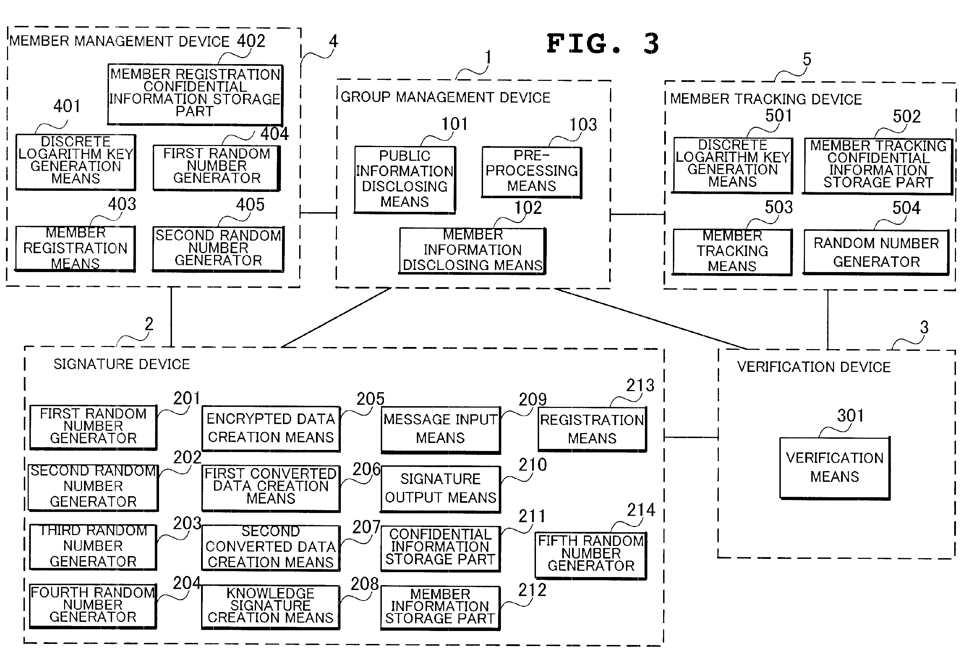

In yet another example configuration, the group signature system of the first embodiment may have a member tracking device 5 in addition to the configuration in Fig. 2. Fig. 3 is a block diagram showing yet another example configuration of a group signature system according to the first embodiment of the present invention. With reference to Fig. 3, the group signature system of the first embodiment has, in addition to the configuration in Fig. 2, a member tracking device 5 wherein the member tracking functions of the group management device 1 are divided.

The example of system configuration in Fig. 3 will now be described. As shown in this figure, the member registration functions and the member tracking functions are divided from the group management device 1. The present invention, however, is not limited to this configuration and is also applicable to any configuration without these functions being divided.

With reference to Fig. 3, the group management device 1 has a public information disclosing means 101, a member information disclosing means 102, and a pre-processing means 103, and creates and discloses public information for use throughout the system.

The signature device 2 has a first random number generator 201, a second random number generator 202, a third random number generator 203, a fourth random number generator 204, an encrypted data creation means 205, a first converted data creation means 206, a second converted data creation means 207, a knowledge signature creation means 208, a message input means 209, a signature output means 210, a confidential information storage part 211, a member information storage part 212, a registration means 213, and a fifth random number generator 214, and creates a group signature after registering members.

The verification device 3 has a verification means 301, and verifies the validity of a given group signature.

The member management device 4 has a discrete logarithm key generation means 401, a member registration confidential information storage part 402, a member registration means 403, a first random number generator 404, and a second random number generator 405, and performs the process of registering group members.

The member tracking device 5 has a discrete logarithm key generation means 501, a member tracking confidential information storage part 502, a member tracking means 503, and a random number generator 504, and has a member tracking function to identify the actual signer from a given group signature.

In the group management device 1, the public information disclosing means 101 stores various kinds of public information outputted by the pre-processing means 103, the discrete logarithm key generation means 401, and the discrete logarithm key generation means 501, and discloses the public information for free reference by all the devices.

The member information disclosing means 102 stores member information created through communication between the member registration means 403 of the member management device 4 and the registration means 213 of the signature device 2, and discloses the public information for free reference by all the devices.

The pre-processing means 103 pre-determines a common constant to be used by this system and outputs the constant to the public information disclosing means 101.

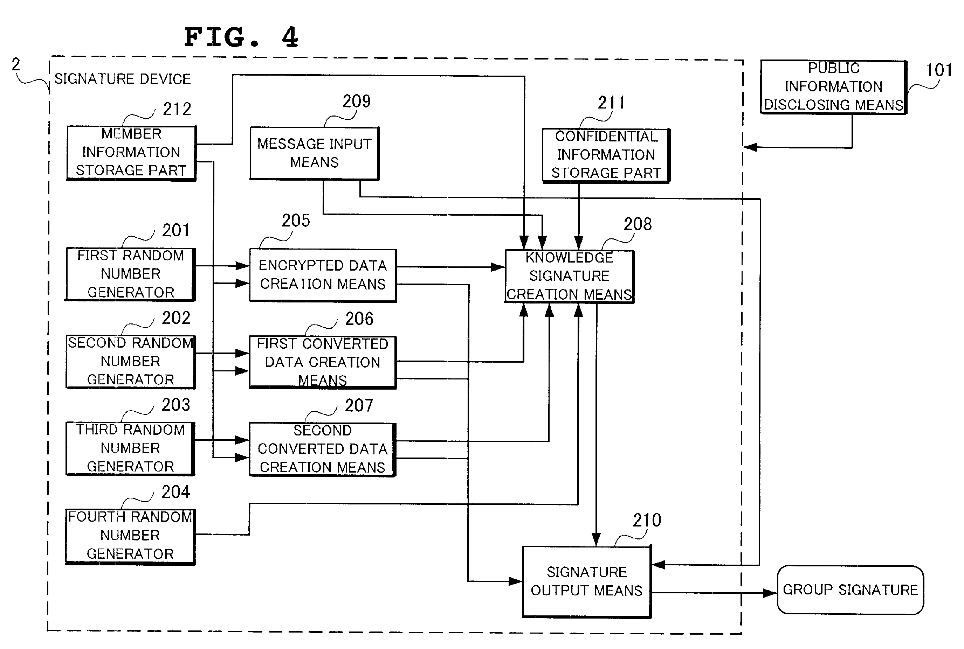

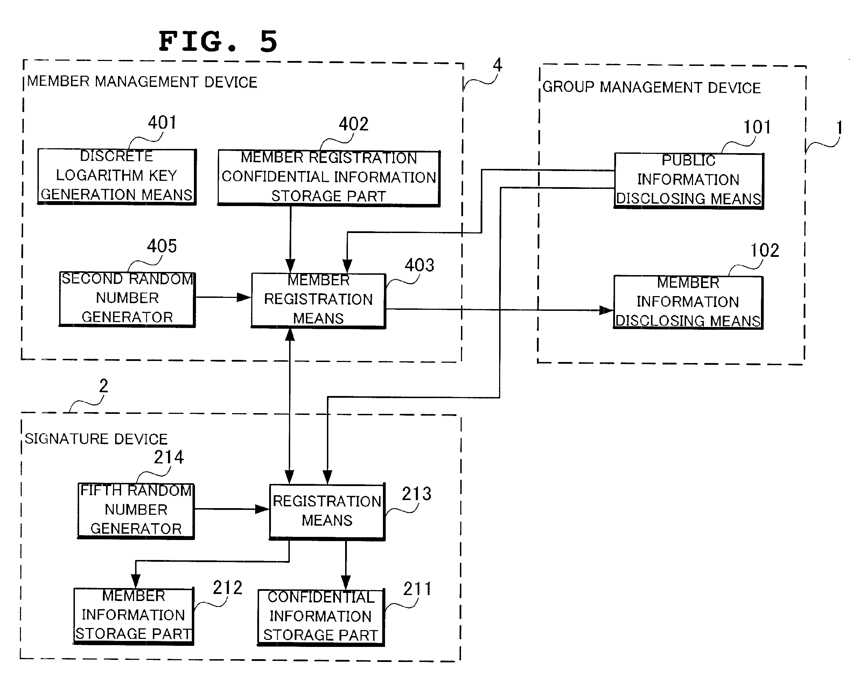

Fig. 4 is a diagram showing the relationship among the blocks comprising a signature device according to the first embodiment of the present invention. Fig. 5 is a diagram showing the relationship among the blocks comprising a signature device and a member management device according to the first embodiment of the present invention.

In Fig. 4, the first random number generator 201 generates a first random number for use by the encrypted data creation means 205.

Similarly, the second random number generator 202 generates a second random number for use by the first converted data creation means 206. The third random number generator 203 generates a third random number for use by the second converted data creation means 207. The fourth random number generator 204 generates a fourth random number for use by the knowledge signature creation means 208.

The encrypted data creation means 205 uses as input the random number generated by the first random number generator 201 and the first element of a member certificate stored in the member information storage part 212, to encrypt the first element of the member certificate, and outputs the resultant encrypted data to the knowledge signature creation means 208 and the signature output means 210.

The first converted data creation means 206 uses as input the second random number generated by the second random number generator 202 and the first element of a member certificate stored in the member information storage part 212, to output converted data from the first element of the member certificate (hereinafter referred to as the "first converted data") to the knowledge signature creation means 208 and the signature output means 210.

The second converted data creation means 207 uses as input the third random number generated by the third random number generator 203 and the first element of a member certificate stored in the member information storage part 212, to output converted data from the first element of the member certificate (hereinafter referred to as the "second converted data") to the knowledge signature creation means 208 and the signature output means 210.

The knowledge signature creation means 208 uses as input the message inputted from the message input means 209, the fourth random number generated by the fourth random number generator 204, the encrypted data, the first converted data, the second converted data, the signature key stored in the confidential information storage part 211, the first and second elements of the member certificate stored in the member information storage part 212, the public information disclosed by the public information disclosing means 101, to output knowledge signature data that indicates that the individual possesses a member certificate and a signature key.

The message input means 209 outputs a message to which a signature will be added to the knowledge signature creation means 208 and the signature output means 210.

The signature output means 210 outputs as a group signature the message inputted from the message input means 209, the encrypted data, the first converted data, the second converted data, and the knowledge signature data.

The confidential information storage part 211 stores a signature key that is a private key to be used for signature generation.

The member information storage part 212 stores the member certificate acquired through communication with the member registration means 403 of the member management device 4.

In Fig. 5, the registration means 213 communicates with the member registration means 403 of the member management device 4, acquires a member certificate containing a signature of the member management device 4 by using as input the fifth random number outputted from the fifth random number generator 214, and outputs the member certificate to the member information storage part 212. The fifth random number generator 214 generates a fifth random number for use to input it in the registration means 213.

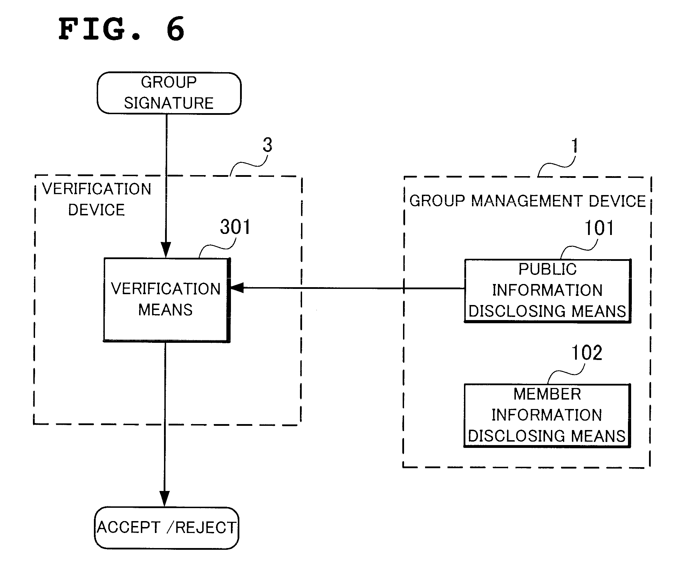

Fig. 6 is a diagram showing the relationship between the block within a verification device and another device according to the first embodiment of the present invention.

The verification means 301 uses as input a given group signature and the public information disclosed by the public information disclosing means 101 of the group management device 1, to verify whether the group signature has duly been outputted from the signature output means 210 of the signature device 2. The verification means 301 accepts the group signature only when the signature has duly been outputted from the signature output means 210; otherwise, it rejects the group signature.

Based on this, the verification means 201 (*301?) verifies whether or not a given group signature is a valid group signature created by a certain signature device by using a correct member certificate and a correct signature key. If the group signature is valid, the signature output means 210 accepts the signature and outputs a message indicating the acceptance of the signature; otherwise, the signature output means 210 rejects the signature and outputs a message indicating the rejection of the signature.

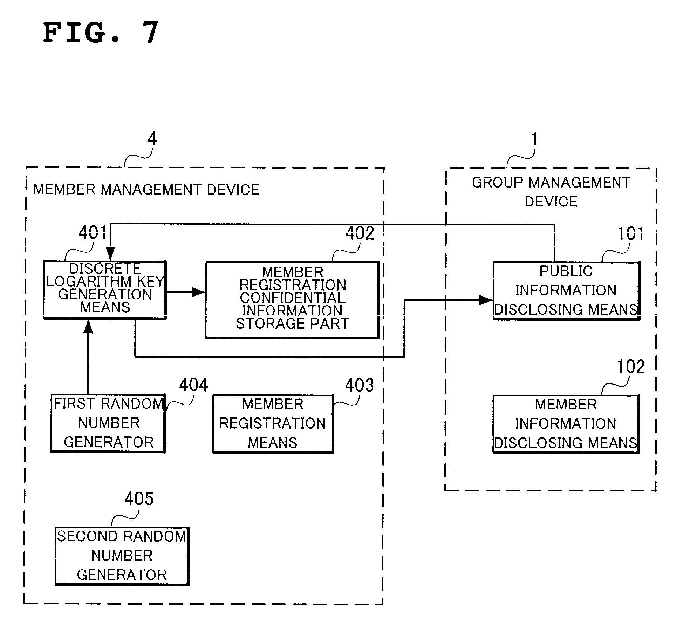

Fig. 7 is a diagram showing the relationship among the blocks comprising a member management device according to the first embodiment of the present invention.

With reference to Fig. 7, the discrete logarithm key generation means 401 receives a random number from the first random number generator 404; using the random number, calculates a public key and a private key based on the discrete logarithm problem for a multiplicative group on a finite field; stores the private key as the member registration private key in the member registration confidential information storage part 402; and outputs the public key as the member registration public key to the public information disclosing means 101 of the group management device 1.

The member registration confidential information storage part 402 stores the private key created by the discrete logarithm key generation means 401.

The first random number generator 404 outputs a random number to the discrete logarithm key generation means 401.

With reference to Fig. 5, the member registration means 403 communicates with the registration means 213 of the signature device 2; using as input a random number from the second random number generator 405 and a private key stored in the member registration confidential information storage part 402, issues to the signature device 2 a member certificate consisting of the first element and the second element; and outputs to the member information disclosing means 102 the member information for the signature device 2 acquired through communication with the signature device 2. A member certificate contains information proving that the holder is a member of the group and is used when the signature device 2 issues a group signature.

The second random number generator 405 outputs a random number to the member registration means 403.

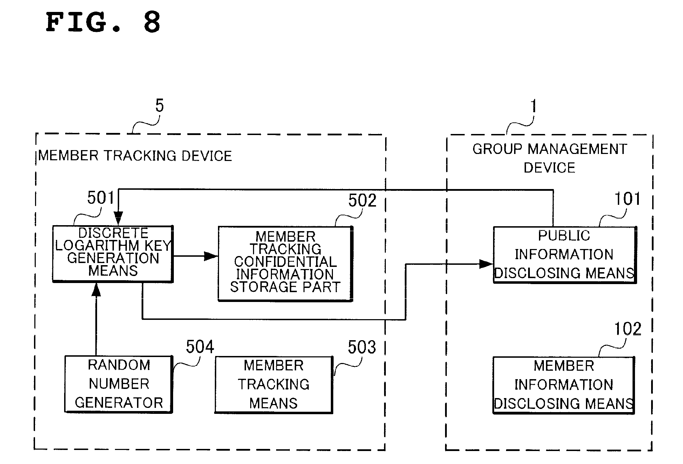

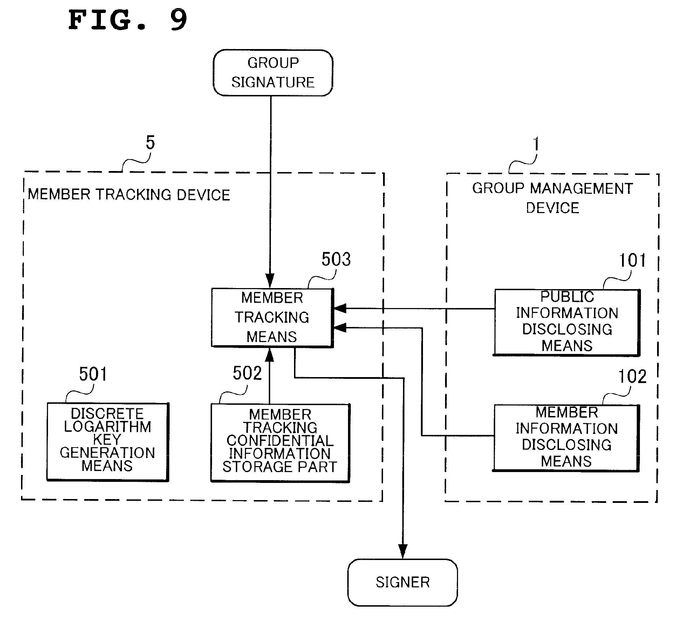

Figs. 8 and 9 each is a diagram showing the relationship among the blocks comprising a member tracking device according to the first embodiment of the present invention.

With reference to Fig. 8, the discrete logarithm key generation means 501 receives a random number from the random number generator 504; using the random number, calculates a public key and a private key based on the discrete logarithm problem for a multiplicative group on a finite field; stores as the member tracking private key the private key in the member tracking confidential information storage part 502; and outputs as the member tracking public key the public key to the public information disclosing means 101 of the group management device 1.

The member tracking confidential information storage part 502 stores the private key created by the discrete logarithm key generation means 501.

The random number generator 504 outputs a random number to the discrete logarithm key generation means 501.

With reference to Fig. 9, the member tracking means 503 identifies the signer of a group signature by using as input a group signature accepted by the verification means 301, the member information disclosed by the member information disclosing means 102, and private key stored in the member tracking confidential information storage part 502.

Detailed operation of the group signature system of the first embodiment will be described below.

First, as a pre-processing process, the pre-processing means 103 sets a public parameter to be commonly used throughout this system. The parameter set here will be used for key creation to be performed later by the signature device 2, the member management means 4, and the member tracking means 5.

In this pre-processing, a first prime number p, a second prime number q, and a third prime number P are selected. At this time, the values of p, q, and P are selected to satisfy the following relationship:

$$q \mid p-1, \quad p \mid P-1$$

The bit counts for p, q, and P are recommended to be as follows, respectively:

$$|q| \geqq 160, \quad |p| \geqq 1024,$$

and

$$|P| \geqq 1024$$

At this time, a partial group $G_q$ of the order q for a multiplicative group $Z_{p*}$ having the order of p is considered. In addition, a partial group $G_q$ of the order q for a multiplicative group $Z_{p*}$ having the order of P is considered.

Then, from $G_p$, a first generator g, a second generator h, and a third generator f are selected. At this time, g, h, and f are selected so that nontrivial a1, a2, and a3 that satisfy the equation "$g^{a1}h^{a2}f^{a3}=1$" will not be known.

Similarly, from $G_p$, a fourth generator G and a fifth generator H are selected. At this time, G and H are selected so that nontrivial β1 and β2 that satisfy the equation "$G^{\beta1}H^{\beta2}=1$" will not be known.

A collision intractable hash function that converts an arbitrary bit row into k bits, $\mathcal{H}$ is selected. The value of k is recommended to be 160.

Finally, the first prime number p, the second prime number q, the third prime number P, the first generator g, the second generator h, the third generator f, the fourth generator G, the fifth generator H, and the collision intractable hash function $y = \mathcal{H}$ are outputted to the public information disclosing means 101.

Then, the member management device 4 uses the discrete logarithm key generation means 401 to create a pair of private and public keys based on a discrete logarithm problem, for use by the member registration means 403. This private key is a member registration private key, while the public key is a member registration public key.

In creating these keys, the first random number generator 404 randomly selects a member registration private key U from a finite field $Z_q$ having the order of the second prime number q that was selected by the pre-processing means 103, and inputs the key thus selected to the discrete logarithm key generation means 401. The discrete logarithm key generation means 401 then calculates a member registration public key

$$y = h^{U} \bmod p$$

by using the second generator h and the member registration private key U. In other words, in the calculation of public and private keys based on a discrete logarithm problem for a multiplicative group on a finite field, the public and private keys are selected so that the private key will be an arbitrary generator of a finite field having the order of a prime number and so that the public key will be a value having the private key as a discrete logarithm.

Finally, a member registration public key y is outputted to the public information disclosing means 101, and the member registration private key U is securely stored in the member management confidential information storage part 402.

Similarly, the member tracking device 5 uses the discrete logarithm key generation means 501 to create a pair of private key and public key based on a discrete logarithm problem, for use by the member tracking means 503. This private key is a member tracking private key, while the public key is a member tracking public key.

In creating these keys, the random number generator 504 randomly selects a member tracking private key e from a finite field $Z_q$ having the order of the second prime number q that was created by the pre-processing means 103, and inputs the key thus selected to the discrete logarithm key generation means 501. The discrete logarithm key generation means 501 then calculates a member registration public key

$$e = g^{\varepsilon} \bmod p$$

by using the first generating element g and the member tracking private key e. Finally, a member tracking public key e is outputted to the public information disclosing means 101, and the member tracking private key e is securely stored in the member tracking confidential information storage part 502.

The process described above is performed when the system starts operation or when the system is initialized.

After the pre-processing and key creation processes, the signature device 2 communicates with the member management device 4 and acquires a signature key and a member certificate for later use when a signature is issued. A member certificate is a signature data created by, for example, following the signature method developed by Nyberg and Rueppel ("Message Recovery for Signature Schemes Based on the Discrete Logarithm Problem, "Advances in Cryptology - EUROCRYPT '94, pp.182-193), using as a signature key a random number selected by the fifth random number generator 214 of the signature device 2 and then using on the converted data from that signature key a member management private key calculated by the member management device 4. This signature data is called a "Nyberg-Rueppl signature." This member certificate consists of a first element and a second element.

An example operation of the member registration means 403 and the registration means 213, both of which are responsible for issuing member certificates, will be described below.

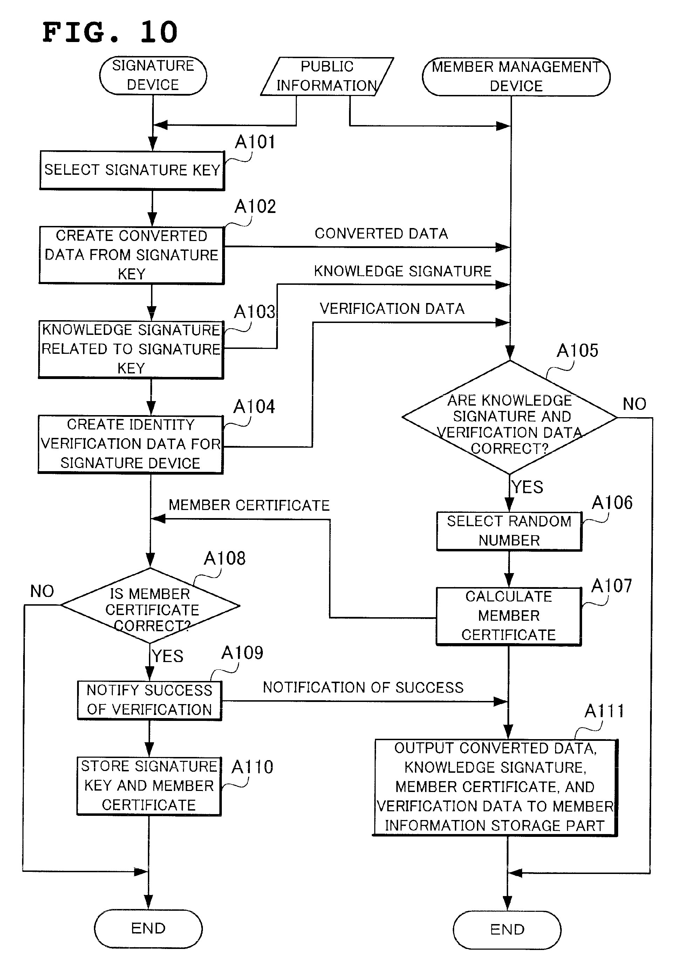

Fig. 10 is a flow chart showing the operation of the group signature system of first embodiment according to the first embodiment when registering a member.

With reference to Fig. 10, in step A101, the registration means 213 of the signature device 2 first receives as a signature key for the signature device 2 one of the generators σ of a finite field $Z_q$ having the order of the second prime number q that was created by the fifth random number generator 214.

Next, in step A102, the registration means 213 calculates

$$I_U = g^\sigma \bmod p$$

to obtain converted data from the signature key σ.

In step A103, the registration means 213 calculates knowledge signature data $spk_U$, which indicates that the signature key σ is a discrete logarithm of the converted data $I_U$ from the signature key in relation to the first generator g. The knowledge signature data $spk_U$ can be created by using the method described in Schnorr, "Efficient Signature Generation by Smart Cards" Journal of Cryptology, 4, 3, pp.161-174), as described below.

A random number λ is selected from a finite field $Z_q$ and (c, s) are calculated using the equation below:

$$c := \mathcal{H}\left(g \,\|\, I_U \,\|\, g^\lambda\right)$$

$$s := \lambda - c\sigma \bmod q$$

The result of this calculation,

$$spk_U = (c,\ s)$$

is knowledge signature data.

In step A104, the registration means 213 creates identity verification data, which indicates that the signature device 2 has duly created the converted data $I_U$ from the signature key and the knowledge signature data $spk_U$. For this purpose, for example, a digital signature for a concatenated data set consisting of the converted data from the signature key and the knowledge signature data can be used.

When the digital signature function $Sig_U$ is used, the identity verification data will be:

$$S_U = Sig_U\ (I_U \,\|\, spk_U)$$

With the digital signature function $Sig_U$, a signature algorithm, such as a DSA or RSA signature, can be used.

The signature device 2 then transmits the converted data $I_U$, knowledge signature data $spk_U$, and identity verification data $S_U$ to the member management device 4.

The member management device 4 verifies whether or not the knowledge signature data $spk_U$ and the identity verification data $S_U$ are correct (step A105). The knowledge signature data $spk_U$ can be verified for correctness by confirming that the following equation holds.

$$c = \mathcal{H}\left(g \parallel I_U \parallel I_U^c \, g^a \right)$$

The digital signature $S_U$ can be verified for correctness by using the digital signature verification function $Ver_U$ corresponding to $Sig_U$ and confirming that the equation below holds:

$$\mathtt{Ver_U \ (S_U, I_U \parallel spk_U) \ = 1}$$

The process can proceed only if both have passed the verification. Otherwise, the process is aborted.

After passing the verification, the member registration means 403 of the member management device 4 receives from the second random number generator 405 a generator $\rho$ of a finite field $Z_q$ having the order of the second prime number q selected randomly (step A106).

Next, in step A107, the member registration means 403 calculates a member certificate $(\gamma, \xi)$ by using the random number $\rho$ received, the member management private key U stored in the member management confidential information storage part 402, and the second generator h disclosed by the public information disclosing means 101, as follows.

$$r := I_U h^\rho \, \mathrm{mod} \, p$$

$$\xi := \rho - r\upsilon \, \mathrm{mod} \, q$$

Then the member management device 4 transmits the member certificate $(\gamma, \xi)$ obtained from the calculation to the signature device 2.

In step A108, the signature device 2 verifies whether the obtained member certificate $(\gamma, \xi)$ has been created correctly. This verification is made by confirming whether or not the equation below holds.

$$\mathtt{r = y^r g^s h^\xi}$$

Once the verification is passed, the signature device 2 notifies the member management device 4 that the member certificate has been verified successfully (step A109). The signature device 2 then stores the signature key s in the confidential information storage part 211 and the member certificate $(\gamma, \xi)$ in the member information storage part 212, respectively (step A110).

On receiving the verification success notification sent in step A109, the member management device 4 outputs to the member information disclosing means 102 a member list for presentation to the signature device 2, the list consisting of the converted data $I_U$ from the signature key, the knowledge signature data $spk_U$, the member certificate $(\gamma, \xi)$ sent to the signature device 2, and the identity verification data $S_U$ (step A111). This registration process must be performed for each signature device. This registration process is performed by each signature device.

After creating a member certificate and a signature key, the signature device 2 creates a group signature for an electronic document message m to which the group signature inputted from the message input means 209 should be inserted, following the procedure described below.

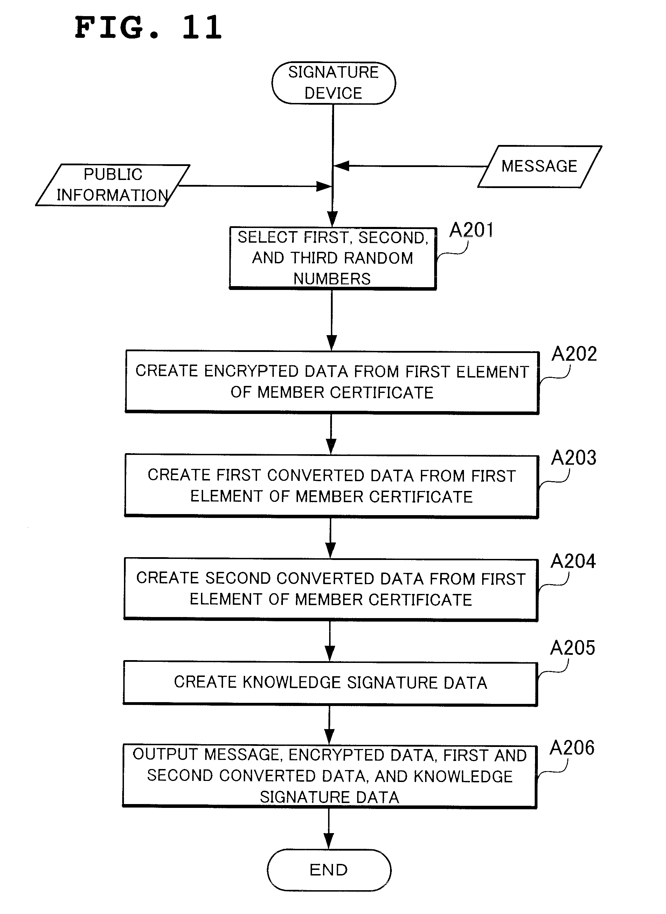

Fig. 11 is a flow chart showing the operation of the signature device of first embodiment according to the present invention when creating a group signature.

With reference to Fig. 11, in step A201, the first random number generator 201 generates a first random number t from a finite field $Z_q$, the second random number generator 202 generates a second random number $\omega$ from a finite field $Z_q$, and the third random number generator 203 generates a third random number a from a finite field $Z_p$.

Next, in step A202, the encrypted data creation means 205 uses as input the first random number t, the first element $\gamma$ of the member certificate, and the member tracking public key e, to calculate:

$$g' := g^{\tau} \bmod p$$

$$e' := r^{-1}e^{\tau} \bmod p$$

These (g', e') are referred to as the encrypted data from the first element r of the member certificate.

Next, in step A203, the first converted data creation means 206 uses as input the second random number $\omega$, the first element r of the member certificate, to calculate;

$$h' := y^{r}f^{\omega} \bmod p$$

This h' is referred to as the first converted data from the first element r of the member certificate.

Next, in step A204, the second converted data creation means 207 uses as input the third random number a, the first element r of the member certificate, to calculate;

$$J \; := \; G^{r}H^{a} \bmod P$$

This J is referred to as the second converted data from the first element r of the member certificate.

Information concerning the first element r of the member certificate will never be divulged even when the converted data is made public, because these encrypted and converted data were created by using random numbers as input.

This means that the first element r of the member certificate has been safeguarded by using random numbers.

Next, in step A205, the knowledge signature creation means 208 creates knowledge signature data.

Knowledge signature data can prove, by using a message m as input, that (i) the first converted data h' and the second converted data J are the correct conversion from the first element r of the member certificate, (ii) both h' and J are the results of converting the first element r of the same member certificate, (iii) the member certificate (r, $\xi$) has been duly acquired through communication with the member management device 4, (iv) the individual knows the signature key s associated with the member certificate (r, $\xi$), and (v) the encrypted data (g', e') are the results of duly encrypting the first element $\gamma$ of the member certificate using the member tracking public key e, while ensuring not to divulge information concerning the member certificate (r, $\xi$), the signature key $\sigma$, the first random number $\tau$, the second random number $\omega$, or the third random number a.

Knowledge signature data in this embodiment proves that the individual knows (r, $\xi$, $\sigma$, $\tau$, $\omega$, a) that satisfy the equation:

$$\begin{cases} g' = g^{\tau} \bmod p \\ e' = r^{-1}e^{\tau} \bmod p \\ h' = y^{r}f^{\omega} \bmod p \\ J = G^{r}H^{a} \bmod p \\ e'h' = f^{\omega}g^{-\sigma}h^{-\xi}e^{\tau} \bmod p \\ r \in [0, p-1] \end{cases}$$

without disclosing $(r, \xi, \sigma, \tau, \omega, a)$ (that is, without divulging such information).

First, a random number $\phi 2j\text{-}1$, where $1 \leqq j \leqq k$, is selected from 0 to p-1. In addition,

$$\phi_{2j} := \phi_{2j-1} - p$$

is assumed.

Next, it is confirmed whether

$$r + \phi_{2j} \in [0, p-1]$$

holds or not. At this time, if

$$r + \phi_{2j-1} \notin [0, p-1] \text{ and } r + \phi_{2j} \in [0, p-1]$$

then $\phi_{2j-1}$ is replaced with $\phi_{2j}$, and the value is substituted so that

$$r + \phi_{2j-1} \in [0, p-1]$$

will hold.

Random numbers, $\psi 2j\text{-}1, \psi 2j$, are selected randomly from a finite field $Z_q$ and random numbers, $\eta_{2j-1}, \eta_{2j}$, from a finite field $Z_p$. Using these random numbers, the equation below is calculated under the condition of $1 \leqq j \leqq k$.

$$V_j := y^{\phi 2j-1}f^{\psi 2j-1} \| y^{\phi 2j}f^{\psi 2j} \| G^{\phi 2j-1}H^{\eta_2 j-1} \| G^{\phi 2j}H^{\eta_2 j}$$

Next, generators, t1, t2, t3, t4, and t5, are selected randomly from a finite field $Z_q$. Using these random numbers, the equation

$$T_1 := y^{t1}f^{t2} \bmod p$$

$$T_2 := f^{t2} \, g^{-t3} \, h^{-t4} \, e^{t5} \, \bmod p$$

$$T_3 := g^{t5} \, \bmod p$$

is calculated.

A random number $\gamma j$ is selected from a finite field $Z_q$ and a random number $u_j$ from a finite field $Z_p$, where $1 \leqq j \leqq k$.

$$e_j := e^{\gamma j} \, \bmod p$$

is calculated.

$$g_j := g^{\gamma j} \, \bmod p$$

$$J_j := G^{e_j} \, H^{u_j} \, \bmod P$$

is also calculated.

Based on the resultant values, the knowledge signature data shown below is calculated. Also, if c[j]=0,

$$c := \mathcal{H} \left( g \| h \| f \| G \| H \| y \| e \| V_1 \| \cdots \| V_k \| T_1 \| T_2 \| T_3 \| g_1 \| \cdots \| g_k \| J_1 \| \cdots \| J_k \| m \right)$$

is calculated, and if c[j]=1,

$$v_{6j-5} := \phi_{2j-1}$$

$$v_{6j-4} := \phi_{2j}$$

$$v_{6j-3} := \psi_{2j-1}$$

$$v_{6j\text{-}2} := \psi_{2j}$$

$$v_{6j\text{-}1} := \eta_{2j\text{-}1}$$

$$v_{6j} := \eta_{2j}$$

$$\omega_j := \gamma_j \bmod q$$

$$z_j := u_j \bmod p$$

is calculated, where c[j] represents the value of the j-th bit of c.

$$v_{6j-5} := r_U + \phi_{2j-1}$$

$$v_{6j-4} := y^{\phi_{2j}} f^{\psi_{2j}}$$

$$v_{6j-3} := \omega + \psi_{2j-1}$$

$$v_{6j-2} := \psi_0 \in_U Z_q$$

$$v_{6j-1} := a + \eta_{2j-1}$$

$$v_{6j} := G^{\phi_{2j}} H^{\eta_{2j}}$$

$$\omega_j := \gamma_j - r \bmod q$$

$$z_j := u_j - ae_j \, r_U^{-1} \bmod p$$

The parts c and ($v_1$, $v_2$, $v_3$, $v_4$, $v_5$, $v_6$, $\cdots$, $v_{6k-5}$, $v_{6k-4}$, $v_{6k-3}$, $v_{6k-2}$, $v_{6k-1}$, $v_{6k}$) prove that the first element r of the member certificate has duly been converted by using the second random number $\omega$ and the third random number a and that the two r's that have been converted in the two equations are identical to each other. This indicates that

$$h' = y^r f^\omega \bmod p \quad and \quad J = G^r H^a \bmod P \quad and \quad r \in [0, p-1]$$

The parts c and (s1, s2, s3, s4, s5) prove that the member certificate ($\gamma$, $\xi$) and the signature key $\omega$ have duly been created. This indicates that

$$e'h' = f^\omega g^{-\sigma} h^\xi e^r \bmod p \quad and \quad h' = y^r f^\omega \bmod p \quad and \quad g' = g^r \bmod p$$

The parts c and ($w_1$, $\cdots$, $w_k$, $z_1$, $\cdots$, $z_k$) prove that the first element r of the member certificate that has been converted using the second converted data J has duly been encrypted using the encrypted data (g', e'). This indicates that

$$J = G^r H^a \bmod P \quad and \quad g' = g^r \bmod p \quad and \quad e' = r^{-1} e^r \bmod p$$

Finally, in step A206, the signature output means 210 outputs as a group signature the encrypted data (g', e'), the first converted data h', the second converted data J, and the knowledge signature data (c, $v_1$, $v_2$, $v_3$, $v_4$, $v_5$, $v_6$, $\cdots v_{6k-5}$, $v_{6k-4}$, $v_{6k-3}$, $v_{6k-2}$, $v_{6k-1}$, $v_{6k}$, $s_1$, $s_2$, $s_3$, $s_4$, $s_5$, $w_1$, $\cdots w_k$, $z_1$, $\cdots z_k$).

The verification means 301 confirms whether or not a given group signature has duly been created. This verification is achieved by verifying the knowledge signature data contained in the group signature.

In verifying knowledge signature data, whether or not the signer of a given group signature duly possesses a member certificate (r, $\xi$) and a signature key s created through communication with the member registration means 403, can be confirmed. Since the member certificate (r, $\xi$) and the signature key s contained in the group signature data are safeguarded by using random numbers, information as to which one of the registered signature devices has created the signature is not disclosed even through the verification process.

The embodiment of the present invention verifies knowledge signature data by way of confirming whether or not the equation below holds:

$$c := \mathcal{H}\left(g \| h \| f \| G \| H \| y \| e \| V_1' \| \cdots \| V_k' \| T_1' \| T_2' \| T_3' \| g_1' \| \cdots \| g_k' \| J_1' \| \cdots \| J_k' \| m\right)$$

where,

$$V_j' = \begin{cases} y^{v_{6j-5}} f^{v_{6j-3}} \| y^{v_{6j-4}} f^{v_{6j-2}} \| \\ G^{v_{6j-5}} H^{v_{6j-1}} \| G^{v_{6j-4}} H^{v_{6j}} & c[j] = 0 \\ y^{v_{6j-5}} f^{v_{6j-3}} / h' \| v_{6j-4} \| \\ G^{v_{6j-5}} H^{v_{6j-1}} / J \| v_{6j} & c[j] = 1 \end{cases}$$

$$T_1' \;=\; h'^c y^{s_1} f^{s_2}$$

$$T_2' \;=\; (e'h')^c f^{s_2} g^{-s_3} h^{-s_4} e^{s_5}$$

$$T_3' \;=\; g'^c g^{s_5}$$

$$g_j' \;=\; g'^{c[j]} g^{w_j} \bmod p$$

$$J_j' \;=\; \begin{cases} G^{\bar{e}_j'} H^{z_j} \bmod P & c[j]=0 \\ J^{\bar{e}_j'} H^{z_j} \bmod P & c[j]=1 \end{cases}$$
$$(\text{where } \bar{e}_j' := e'^{c[j]} e^{w_j} \bmod p)$$

If the knowledge signature data passes the verification, the group signature is accepted. If the knowledge signature data fails the verification, the group signature is rejected.

In the member tracking device 5, the member tracking means 503 identifies the actual signer of the group signature accepted by the verification device 301.

First, using the member tracking private key e stored in the member tracking confidential information storage part 502,

$$\bar{r} := g'^{\varepsilon} \big/ e' \bmod p$$

is calculated. Then, from the encrypted data for a given group signature, the first element of the member certificate representing the signer of the signature, r

is decrypted. At the same time, using the member tracking private key e stored in the member tracking confidential information storage part 502, data, proving that the result of decryption, $\bar{r}$ is really the result of duly decrypting the encrypted data (g', e') using the member tracking private key e, is created.

A random number d is selected from a finite field $Z_q$,

$$c := \mathcal{H}\!\left( g' \,\big\|\, e' \,\big\|\, \bar{r}^{-1} e' \,\big\|\, g'^{\delta} \right)$$

$$s := \delta - c\varepsilon \bmod q$$

is calculated, The resultant (c, s) is the proof data. By the voucher provided by this proof data, it is guaranteed that the member tracking device 5 has duly decrypted

$\bar{r}$

from the group signature.

Next, a search is made from the member lists $\{<I_U, spk_U, r, \xi, S_U>\}$ disclosed in the member information disclosing means 102, to find the member list $(I_U, spk_U, r, \xi, S_U)$ containing the first element r that is the same as the first element of the decrypted member certificate shown below:

$$\overline{r}$$

If found, the signature device corresponding to the matching member list is identified as the signer of the group signature.

In the present embodiment, the member management device 4 and the member tracking device 5 may be included in the group management device 1. It is also possible to use a finite field on an elliptic curve, instead of a multiplicative group on a finite field, which is used in the computation in the embodiment described above.

As described above, according to the present embodiment, information concerning member certificates is safeguarded in the encrypted data creation means 205, the first converted data creation means 206, and the second converted data creation means 207, by using random numbers that will not be disclosed later as an element of the group signature element. This makes it possible to provide secure and reliable group signatures, because devices that do not have confidential information necessary for member tracking are not able to acquire information concerning the signer from the group signature data. Furthermore, since the member management device 4 is not capable of identifying the signer of a given signature, it is possible to safely divide the functions of the group management device into two, member management device 4 and member tracking device 5.

The second embodiment of the present invention will now be described in detail referring to the drawings.

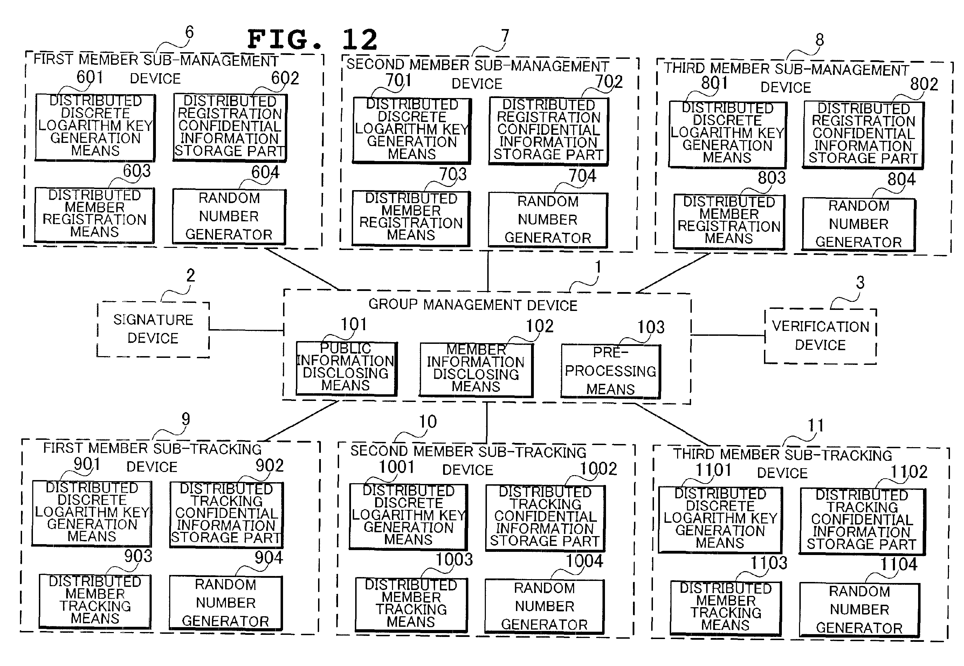

Fig. 12 is a block diagram showing an example configuration of a group signature system according to the second embodiment of the present invention. With reference to Fig. 12, the group signature system of the second embodiment has a group management device 1, a signature device 2, a verification device 3, a first to third member sub-management devices 6 to 8, and a first to third member sub-tracking device 9 to 11.

While this embodiment is described using an example that distributes the functions of the group management device into three member sub-management devices and three member sub-tracking devices, there is no limitation to the number of devices into which the functions can be distributed. The first to third member sub-management devices 6 to 8, and the first to third member sub-tracking devices 9 to 11 are connected among one another via a broadcast channel, respectively. The first to third member sub-management devices 6 to 8 distribute the functions among themselves to perform the process of registering group members. The first to third member sub-tracking devices 9 to 11 distribute the functions among themselves to perform the process of identifying from a group signature which member has created the signature.

The group management device 1 has the same configuration as its counterpart in the first embodiment and discloses public information for use commonly throughout the system. The signature device 2 has the same configuration as its counterpart in the first embodiment. The verification device 3 has the same configuration as its counterpart in the first embodiment.

Each of the first to third member sub-management devices 6 to 8 has a distributed discrete logarithm key generation means 601, 701, 801, a distributed registration confidential information storage part 602, 702, 802, a distributed member registration means 603, 703, 803, and a random number generator 604, 704, 804. For simplification, the following description takes as an example the member sub-management device 6.

The distributed discrete logarithm key generation means 601 generates through communication with another member sub-management device a distributed management private key for use by the distributed member sub-management means 603, and outputs the resultant key to the distributed registration confidential information storage part 602.

The distributed registration confidential information storage part 602 stores the distributed registration private key generated by the distributed discrete logarithm key generation means 601.

The distributed member registration means 603 communicates with a signature device 2 and issues a member certificate to that signature device 2. It should be noted that a member certificate issued by the distributed member registration means 603 does not by itself have a function of member certificate. The signature device 2 can calculate a member certificate for later use from a member certificate that it received from each member management device.

The random number generator 604 generates random numbers for use by the distributed discrete logarithm key generation means 601 and the distributed member registration means 603.

The first, second, and third member sub-tracking device 9, 10, 11 each has a distributed discrete logarithm key generation means 901, 1001, 1101, a distributed tracking confidential information storage part 902, 1002, 1102, a distributed member tracking means 903, 1003, 1103, and a random number generator 904, 1004, 1104. The following description is simplified by taking the member sub-tracking device 9 as a typical example.

The distributed discrete logarithm key generation means 901 generates a distributed tracking private key for use by the distributed member tracking means 903 through communication with another member sub-tracking device, and outputs the resultant key to the distributed tracking confidential information storage part 902.

The distributed tracking confidential information storage part 902 stores the distributed tracking private key generated by the distributed discrete logarithm key generation means 901.

The distributed member tracking means 903 communicates with another member sub-tracking device and, during the course of communication, uses as input the group signature accepted by the verification means 301 of the verification device 3, the distributed tracking private key stored by the distributed tracking confidential information storage part 902, and the member information disclosed by the member information disclosing means 102, to identify and output the signer of a given group signature.

The random number generator 904 generates random numbers for use by the distributed discrete logarithm key generation means 901 and the distributed member tracking means 903.

Detailed operation of the group signature system of the second embodiment will be described below.

First, similarly to the first embodiment, in a pre-processing process, the pre-processing means 103 of the group management device 1 generates public information

$(p , q, P, g, h, f, G, H, y = 1)$

and the public information disclosing means 101 discloses this information.

Next, each of the distributed discrete logarithm key generation means 601, 701, 801 of the first, second, and third member sub-management devices 6, 7, 8 creates a public key and a distributed private key for use for member registration, and stores the distributed private key in the distributed registration confidential information storage parts 602, 702, 802, respectively. It should be noted that a distributed private key does not by itself serve as a private key, but the three member sub-management devices 6, 7, 8, when all operate properly, can perform the function similar to the process of the first embodiment which is accomplished by using a member registration private key.

As an example for explaining the present embodiment, a key generation means following the distributed private key generation method for a cryptosystem based on a discrete logarithm problem, which is shown in Pedersen "A Threshold Cryptosystem without a Trusted Party" (Advances in Cryptology-EUROCRYPT '91, pp.522-526), will be described below.

The first, second, and third member sub-management devices 6, 7, 8 each randomly selects a quadratic polynomial on $Z_q$. Here, the first member sub-management device 6 selects a polynomial $f_1(z)$.

$$f_1(z) = a_{10} + a_{11}z + a_{12}z^2 \bmod q$$

Similarly, the second and third member sub-management devices 7, 8 select $f_2(z)$ and $f_3(z)$, respectively.

The first member sub-management device 6 transmits

$$H_{11} = h^{a_{11}} \bmod p , \quad H_{12} = h^{a_{12}} \bmod p , \quad H_{13} = h^{a_{13}} \bmod p$$

to the second member sub-management device 7 and the third member sub-management device 8.

Similarly, the second member sub-management device 7 transmits $H_{21}$, $H_{22}$, and $N_{23}$ to the first and third member sub-management devices 6, 8, while the third member sub-management device 8 transmits $H_{31}$, $H_{32}$, and $H_{33}$ to the first and second member sub-management devices 6, 7.

If $a_{10}$, $a_{20}$, and $a_{30}$ are notated as $U_1$, $U_2$, and $U_3$, respectively, then $U_1$, $U_2$, and $U_3$ each represents a distributed management private key for each of the member sub-management devices 6, 7, 8. In addition,

$$y_1 = H_{10} = h^{v_1} \bmod p , \quad y_2 = H_{20} = h^{v_2} \bmod p , \quad y_3 = H_{30} = h^{v_3} \bmod p$$

are outputted to the public information disclosing means 101.

The first member sub-management device 6 transmits

$$\overline{v}_{12} = f_1(2) \bmod q$$

to the second member sub-management device 7, and transmits

$$\overline{\upsilon}_{13} = f_1(3) \bmod q$$

to the third member sub-management device 8, both confidentially so that the content of transmission will not be known to other devices.

Similarly, the second member sub-management device 7 transmits

$$\overline{\upsilon}_{21} = f_2(1) \bmod q$$

to the first member sub-management device 6, and transmits

$$\overline{\upsilon}_{23} = f_2(3) \bmod q$$

to the third member sub-management device 8, both confidentially so that the content of transmission will not be known to the other devices. The third member sub-management device 7 transmits

$$\overline{\upsilon}_{31} = f_3(1) \bmod q$$

to the first member sub-management device 6, and transmits

$$\overline{\upsilon}_{32} = f_3(2) \bmod q$$

to the second member sub-management device 7, both confidentially so that the content of transmission will not be known to the other devices.

By this, the first member sub-management device 6 receives from the second member sub-management device 7 $H_{21}$, $H_{32}$, $H_{23}$, and
$\overline{\upsilon}_{21}$ and, from the third member sub-management device 8, $H_{31}$, $H_{32}$, and $H_{33}$ and
$\overline{\upsilon}_{31}$

The first member sub-management device 6 then verifies
$\overline{\upsilon}_{21}$
and
$\overline{\upsilon}_{31}$
which have been received from the other member-sub management devices. This verification is achieved by confirming whether or not the equation below is satisfied.

$$h^{\overline{\upsilon}_{21}} = (H_{21})^{1^1} \cdot (H_{22})^{1^2} \cdot (H_{23})^{1^3} \bmod p$$

$$h^{\overline{v}_{31}} = (H_{31})^{1^1} \cdot (H_{32})^{1^2} \cdot (H_{33})^{1^3} \bmod p$$

If this verification fails, each member sub-management device notifies the failure to the source member sub-management device. A member sub-management device that has received a failure notification from both the other two member sub-management devices loses its role as an administrator.

If a member sub-management device receives notification of the failure of verification from only one of the other two member sub-management devices, for example, if the first member sub-management device 6 alone has failed the verification of the second member sub-management device 7, then the second member sub-management device 7 is assumed to satisfy the verification equation.

$\overline{v}_{21}$

is transmitted to the first member sub-management device 6 again. If this

$\overline{v}_{21}$

fails to satisfy the verification equation for the first member sub-management device 6, then the second member sub-management device 7 loses its role as an administrator. If the second member sub-management device 7 ceases to be an administrator, this device proceeds to the subsequent process by assuming that $U_2=0$ and $y_2=1$.

A member registration public key y, which is commonly used by all the member sub-management devices, is calculated using the equation:

$$y = y_1 \cdot y_2 \cdot y_3 \cdot \bmod p$$

More specifically, each of the member sub-management devices 6, 7, 8 obtains a registration public key and a distributed registration private key in such a manner that its own distributed registration private key is the one to be assigned to itself, among the distributed values for obtaining the generator of a finite field having the order of a prime number and that the registration public key is a value having as its discrete logarithm a generator to be established from a plurality of distributed registration private keys. At this time, the registration public key is a generator of a multiplicative group on a finite field.

The public key y is then disclosed by the public information disclosing means 101 of the group management device 1. The first, second, and third member sub-management devices 6, 7, 8 store $U_1$, $U_2$, and $U_3$, respectively, as distributed registration private keys in the respective distributed registration confidential information storage part 602, 702, 802.

Similarly, the distributed discrete logarithm key generation means 901, 1001, 1101 of the first, second, and third member sub-tracking devices 9, 10, 11 each creates a public key and a distributed private key for use for member tracking, stores as a member tracking private key the distributed private key in the respective distributed tracking confidential information storage parts 902, 1002, 1102, and causes the public information disclosing means 101 of the group management device 1 to disclose the public key as a member tracking public key. The member tracking public key is represented as e, and the private keys held by the respective member sub-tracking devices as $e_1$, $e_2$, and $e_3$.

On completion of the pre-processing process and the key creation process, the signature device 2 communicates with the first, second, and third member sub-management devices 6, 7, 8, respectively, and, similarly to the first embodiment, acquires a member certificate (r, ξ) and a private key s.

The registration means 213 of the signature device 2 performs similar operation to steps A101 to A104 in Fig. 10; it uses as a signature key a random number s selected from a finite field Zq, which is generated by the fifth random number generator 214, to create converted data $I_U$ from a signature key, knowledge signature data $spk_U$, and identity verification data $S_U$. The signature device 2 then transmits the converted data $I_U$, knowledge signature data $spk_U$, and identity verification data $S_U$ to all of the first, second, and third member sub-management devices 6, 7, 8.

On receiving the converted data $I_U$, knowledge signature data $spk_U$, and identity verification data $S_U$, the first, second, and third member sub-management devices 6, 7, 8 each verifies whether or not the knowledge signature data $spk_U$ and identity verification data $S_U$ are correct, just as in step A105 in Fig. 10.

If both pass the verification, the member sub-management device proceeds to the subsequent process. Otherwise, the process is aborted.

On completion of the verification, just as in the creation of a distributed member management private key, the first, second, and third member sub-management device 6, 7, 8 each calculates distributed information $k_1$, $k_2$, $k_3$ associated with the random number k, which is the generator of the finite field $Z_q$. The first member sub-management device 6 outputs

$$t_1 = h^{k_1} \bmod p$$

the second member sub-management device 7 outputs

$$t_2 = h^{k_2} \bmod p$$

and the third member sub-management device 8 outputs

$$t_3 = h^{k_3} \bmod p$$

to the public information disclosing means 101, respectively. In addition,

$$t = t_1 \cdot t_2 \cdot t_3 \bmod p$$

is also disclosed by the public information disclosing means 101.

Next, the first, second, and third member sub-management devices 6, 7, 8 each uses the public information t to calculate the first element of a member certificate

$$r := I_U h^t \bmod p$$

Since r is calculated using the public information t as input, all the member sub-managers obtain the same value. The first, second, and third member sub-management devices 6, 7, 8 each uses the random numbers $k_1$, $k_2$, $k_3$ that have been generated for distribution purposes and the distributed private keys $U_1$, $U_2$, $U_3$ that are stored in the distributed registration confidential information storage parts 602, 702, 802, to calculate

$$\xi_1 = k_1 - r\upsilon_1 \bmod q \ , \ \xi_2 = k_2 - r\upsilon_2 \bmod q \ , \quad \text{and} \ \xi_3 = k_3 - r\upsilon_3 \bmod q$$

respectively. Then the first member sub-management device 6 transmits (r, $\xi_1$), the second member sub-management device 7 transmits (r, $\xi_2$), and the third member sub-management device 8 transmits (r, $\xi_3$), respectively to the signature device 2.

The signature device 2 verifies whether or not the received member certificates (r, $\xi_1$), (r, $\xi_2$), (r, $\xi_3$) have duly been created by confirming if

$$h^{\xi_1} = t_1 y_1^{-r} \bmod p \ , \ h^{\xi_2} = t_2 y_2^{-r} \bmod p \ , \quad \text{and} \quad h^{\xi_3} = t_3 y_3^{-r} \bmod p$$

are satisfied. If this verification passes, the signature device 2 notifies the successful confirmation of the member certificate to the first, second, and third member sub-management devices 6, 7, 8. The signature device 2 then uses as input the second element of all the member certificates received from the first, second, and third member sub-management devices 6, 7, 8, to calculate

$$\xi \;=\; \xi_1 + \cdots + \xi_n$$

The signature device 2 stores $(r, \xi)$ as the member certificate in the member information storage part 212, and stores the signature key s in the confidential information storage part 211.

On receiving a notification of successful verification, the member management device 4 outputs to the member information disclosing means 102 the member certificate transmitted to the signature device 2, the converted data from the signature key received from the signature device 2, the knowledge signature data, and the identity verification data, as a member list indicating the signature device 2.

In the present embodiment, the creation of a signature by the signature device 2 and the verification of a signature by the verification device 3 are performed in a similar manner to the first embodiment.

The member tracking devices 903, 1003, 1103 of the first, second, and third member sub-tracking devices 9, 10, 11 operate as follows.

First, the first, second, and third member sub-tracking devices 9, 10, 11 each decrypts the encrypted data (g', e') contained in a given group signature. The member sub-tracking devices 9, 10, 11 each uses the distributed tracking private key $e_1$, $e_2$, $e_3$ stored in the respective distributed tracking confidential information storage parts 902, 1002, 1102 to calculate

$$g'_1 := g'^{\varepsilon 1} \bmod p \;,\; g'_2 := g'^{\varepsilon 2} \bmod p \;,\; g'_3 := g'^{\varepsilon 3} \bmod p$$

respectively. By using the results in the calculation of

$$\bar{r} := g'^{\varepsilon}\big/ e' = \left( g' \right)^{\varepsilon_1 + \varepsilon_2 + \varepsilon_3}\big/ e' = \left( g'_1 \cdot g'_2 \cdot g'_3 \right)\big/ e' \bmod p$$

decrypted data r from the member certificate associated with the signer of the given group signature can be obtained. Similarly to the first embodiment, the first, second, and third member sub-tracking devices 9, 10, 11 each searches the member lists $\{<I_U, spk_U, r, \xi, S_U>\}$ that are disclosed in the member information disclosing means 102, to find a member list $(I_U, spk_U, r, \xi, S_U)$ containing the first element r of the member certificate that matches the first element of the decrypted member certificate $\bar{r}$ and identifies the signature device 2 associated with the matching member list as the signer of the given member list.

The present embodiment has three member sub-management devices and three member sub-tracking devices, and the process described above is completed successfully only when all these devices operate properly. For generality purposes, let us assume that the n number of member sub-management devices and the n number of member sub-tracking devices exist in the system. Suppose

$$t < n/2$$

and the polynomial equation selected by the i-th member sub-management device or the member sub-tracking device during the key creation process is

$$f_i(z) = a_{i0} + a_{i1}z + \ldots + a_{it}z^t \bmod q$$

then the member registration and tracking processes will be completed successfully only when at least the t number of member sub-management devices or member sub-tracking devices operate properly.

As described in the foregoing, according to the present embodiment, the computational amount involved in the distributed private key generation process and the distributed member registration process performed by member sub-management devices can be reduced, leading to lower loads on each member sub-management device, because the functions of a member management device are distributed among a plurality of member sub-management devices, and the private key to be used by the plurality of member sub-management devices for calculating a member certificate is selected from a cryptosystem based on a discrete logarithm problem.

Furthermore, according to the present embodiment, the computational amount involved in the distributed private key generation process and the distributed signer identification process performed by member sub-management (*tracking?) devices can be reduced, leading to lower loads on each member sub-tracking device, because the functions of a member tracking device are distributed among a plurality of member sub-tracking devices, and the private key to be used by the plurality of member sub-tracking devices for identifying the signer is selected from a cryptosystem based on a discrete logarithm problem.

According to the present invention, it is possible to provide a secure and reliable group signature, from which devices other than the special one (member tracking device) cannot identify the signer from a group signature, because the signature device safeguards the information concerning a member certificate by using a random number that is not disclosed as an element of the group signature and thus devices without a private key required for member tracking cannot decrypt the information. The present invention also makes it possible to safely divide the functions of a group management device into the function to register a member and the function to identify the signer of a group signature. In addition, the computational amount involved in the distributed private key generation process and the distributed member registration process performed by member sub-management devices can be reduced, leading to lower loads on each member sub-management device, because the functions of a member management device are distributed among a plurality of member sub-management devices, and the private key to be used by the plurality of member sub-management devices for calculating a member certificate is selected from a cryptosystem based on a discrete logarithm problem. Furthermore, the computational amount involved in the distributed private key generation process and the distributed signer identification process performed by member sub-management (*tracking?) devices can be reduced, leading to lower loads on each member sub-tracking device, because the functions of a member tracking device are distributed among a plurality of member sub-tracking devices, and the private key to be used by the plurality of member sub-tracking devices for identifying the signer is selected from a cryptosystem based on a discrete logarithm problem.

## Claims

1. A group signature system which creates a group signature to prove that the signer is really a member registered in the group and which confirms whether or not said signer of said group signature thus created is really a member of said group, comprising:

   a group management device which discloses public information for common use throughout the system, in a referenceable manner from other devices,
   a signature device which creates, from a member certificate containing a first element and a second element, encrypted data by encrypting said first element through use of a first random number and said public information disclosed by said group management device; creates first converted data by converting said first element through use of a second random number and said public information; creates second converted data by converting the first element through use of a third random number and the public information; creates knowledge signature data from a message to which a signature will be added, a fourth random number, said encrypted data, said first converted data, said second converted data, a signature key which is a private key to be used for the creation of a signature, said first element, and said second element; and outputs as a group signature said encrypted data, said first converted data, said second converted data, and said knowledge signature data, together with said message; and
   a verification device that verifies whether said group signature has duly been created by using the first and second elements contained in the member certificate of one of the registered members in said group and said signature key, based on said message and said group signature outputted from said signature device and said public information disclosed by said group management device.

2. The group signature system of claim 1, wherein said signature device creates said knowledge signature data in such a manner that it can be proved that said encrypted data, said first converted data, and said second converted data have been created from the same value and that information concerning said first element, said second element, and said signature key will not be divulged; and
   said verification device verifies whether said group signature has been created by using the first and second elements contained in the member certificate of one of the registered members in said group and said signature key, without using information concerning said first element, said second element, and said signature key.

3. The group signature system of claim 1 or 2, further comprising a member management device which, when registering a new member into said group, selects a member registration private key so that the key will be a generator of a finite field having the order of a prime number; uses a discrete logarithm as said member registration private key; obtains a member registration public key, which is a generator of a multiplicative group on a finite field, from said member registration private key; notifies said member registration public key as public information to said group management device; stores said member registration private key in itself; and creates a member certificate using such member registration private key and notifies the resultant member certificate to said signature device.

4. The group signature system of claim 3, wherein said member certificate is a Nyberg-Rueppel signature which uses said signature key as a discrete logarithm and which is created by using said member registration private key on the converted data from said signature key.

5. The group signature system of claim 3 or 4, wherein said group management device discloses, in addition to said public information, said member information notified by said member management device in a referenceable manner from other devices.

6. The group signature system of claim 1 or 2, further comprising a plurality of member sub-management devices which, when registering a new member into said group, assigns one of the distributed values for obtaining the required generator of a finite field having the order of a prime number as its own distributed member registration private key; stores said distributed member registration private key in itself; and uses as a member registration public key the value having generator as a discrete logarithm, and wherein
said signature device obtains a member certificate by communicating with a plurality of said member sub-management devices, and
said group management device acquires said member registration public key.

7. The group signature system of any one of claims 1 to 6, further comprising a member tracking device which selects a member tracking private key so that the key will be a generator of a finite field having the order of a prime number; uses a discrete logarithm as said member tracking private key; obtains a member tracking public key that is a generator of a multiplicative group on a finite field from said member tracking private key; notifies said member tracking public key as said public information to said group management device; stores said member tracking private key in itself; when identifying the signer of a group signature, decrypts the encrypted data contained in said group signature by using said member tracking private key; and, if the result of decryption matches the first element of one of said member certificates which have been disclosed by said group management device, identifies the member of such member certificate as the signer; and wherein
said group management device has disclosed said member certificate as said member information; and
when creating said encrypted data by encrypting said first element, said signature device uses said member tracking public key as said public information.

8. The group signature system of any one of claims 1 to 6, further comprising a plurality of member sub-tracking devices, wherein the distributed member tracking private key for each member sub-tracking device is the one to be assigned to itself, among the distributed values for obtaining the generator of a finite field having the order of a prime number; and each of which obtains said distributed member tracking private key so that the member tracking public key has a discrete logarithm as the generator of said finite field and will be a generator of a multiplicative group on a finite field; and each of which stores said distributed member tracking private key in itself;
when creating said encrypted data by encrypting said first element, said signature device uses said member tracking public key as said public information;
said group management device has disclosed said member certificate as said member information; and
during the process of identifying the signer of a group signature, each of said member sub-tracking devices identifies the member of one of said member certificates as the signer, if the decryption result obtained from the result of performing a pre-determined calculation on the encrypted data contained in said member group signature by using each of their said distributed member tracking private keys matches the first element of one of said member certificates that have been disclosed by said group management device.

9. The group signature system of any one of claims 3, 6, 7 or 8, wherein a finite field on an elliptic curve is used instead of said multiplicative group on a finite field.

**10.** A group signature method for a group signature system having a group management device, a signature device and a verification device, which creates a group signature to prove that the signer is really a member registered in the group and which confirms whether or not said signer of said group signature thus created is really a member of said group, comprising the steps of:

said group management device
disclosing public information for common use throughout the system, in a referenceable manner from other devices;
said signature device
storing a member certificate consisting of a first element and a second element,
creating encrypted data by encrypting said first element using a first random number and said public information disclosed by said group management device,
creating first converted data by converting said first element using a second random number and said public information,
creating second converted data by converting said first element using a third random number and said public information;
creating knowledge signature data from a message to which a signature will be added, a fourth random number, said encrypted data, said first converted data, said second converted data, a signature key which is a private key to be used for the creation of a signature, said first element, and said second element, in such a manner that it can be proved that said encrypted data, said first converted data, and said second converted data have been created from the same value and that information concerning said first element, said second element, and said signature key will not be divulged, and
outputting as a group signature said encrypted data, said first converted data, said second converted data, and said knowledge signature data, together with said message, and
said verification device
verifying whether or not said group signature has been created by using the first and second elements contained in the member certificate of one of the registered members in said group and said signature key, based on said message and said group signature outputted from said signature device and said public information disclosed by said group management device without using the information concerning said first and second elements and said signature key.

**11.** A group signature device which forms a group signature system together with a group management device that discloses public information for common use throughout the system in a referenceable manner from other devices and a verification device that confirms whether or not the signer of a group signature is a member registered in said group, and which creates a group signature that can prove that said signer is a member registered in said group, comprising:

a member information storage means which stores a member certificate consisting of a first element and a second element,
an encrypted data creation means which creates encrypted data by encrypting said first element using a first random number and said public information disclosed by said group management device,
a first converted data creation means which creates first converted data by converting said first element using a second random number and said public information,
a second converted data creation means which creates second converted data by converting said first element using a third random number and said public information,
a knowledge signature creation means which creates knowledge signature data from a message to which a signature will be added, a fourth random number, said encrypted data, said first converted data, said second converted data, a signature key which is a private key to be used for the creation of a signature, said first element, and said second element, in such a manner that it can be proved that said encrypted data, said first converted data, and said second converted data have been created from the same value and that information concerning said first element, said second element, and said signature key will not be divulged, and
a signature output means which outputs as a group signature said encrypted data, said first converted data, said second converted data, and said knowledge signature data, together with said message.

**12.** A group signature program to be run on a computer to make the computer operate as a group signature device, which forms a group signature system together with a group management device that discloses public information for common use throughout the system in a referenceadle manner from other devices and a verification device that confirms whether or not the signer of a group signature is a member registered in said group, in order to create a group signature that can prove that said signer is a member registered in said group, comprising the processes of:

a member information storage means storing a member certificate consisting of a first element and a second element;

an encrypted data creation means creating encrypted data by encrypting said first element using a first random number and said public information disclosed by said group management device;

a first converted data creation means creating first converted data by converting said first element using a second random number and said public information;

a second converted data creation means creating second converted data by converting said first element using a third random number and said public information; and

a knowledge signature creation means creating knowledge signature data from a message to which a signature will be added, a fourth random number, said encrypted data, said first converted data, said second converted data, a signature key which is a private key to be used for the creation of a signature, said first element, and said second element, in such a manner that it can be proved that said encrypted data, said first converted data, and said second converted data have been created from the same value and that information concerning said first element, said second element, and said signature key will not be divulged; and

a signature output means outputting as a group signature said encrypted data, said first converted data, said second converted data, and said knowledge signature data, together with said message.

FIG. 1

GROUP MANAGEMENT DEVICE — 1

101 — PUBLIC INFORMATION DISCLOSING MEANS

102 — MEMBER INFORMATION DISCLOSING MEANS

2 — SIGNATURE DEVICE

201 — FIRST RANDOM NUMBER GENERATOR

202 — SECOND RANDOM NUMBER GENERATOR

203 — THIRD RANDOM NUMBER GENERATOR

204 — FOURTH RANDOM NUMBER GENERATOR

205 — ENCRYPTED DATA CREATION MEANS

206 — FIRST CONVERTED DATA CREATION MEANS

207 — SECOND CONVERTED DATA CREATION MEANS

208 — KNOWLEDGE SIGNATURE CREATION MEANS

209 — MESSAGE INPUT MEANS

210 — SIGNATURE OUTPUT MEANS

211 — CONFIDENTIAL INFORMATION STORAGE PART

212 — MEMBER INFORMATION STORAGE PART

3 — VERIFICATION DEVICE

301 — VERIFICATION MEANS

EP 1 710 954 A1

# FIG. 2

MEMBER MANAGEMENT DEVICE

4

**401** DISCRETE LOGARITHM KEY GENERATION MEANS

**402** MEMBER REGISTRATION CONFIDENTIAL INFORMATION STORAGE PART

**403** MEMBER REGISTRATION MEANS

GROUP MANAGEMENT DEVICE 1

SIGNATURE DEVICE 2

VERIFICATION DEVICE 3

# FIG. 3

**MEMBER MANAGEMENT DEVICE** 402 | 4

- 401 DISCRETE LOGARITHM KEY GENERATION MEANS
- 402 MEMBER REGISTRATION CONFIDENTIAL INFORMATION STORAGE PART
- 404 FIRST RANDOM NUMBER GENERATOR
- 403 MEMBER REGISTRATION MEANS
- 405 SECOND RANDOM NUMBER GENERATOR

**GROUP MANAGEMENT DEVICE** | 1

- 101 PUBLIC INFORMATION DISCLOSING MEANS
- 103 PRE-PROCESSING MEANS
- 102 MEMBER INFORMATION DISCLOSING MEANS

**MEMBER TRACKING DEVICE** | 5

- 501 DISCRETE LOGARITHM KEY GENERATION MEANS
- 502 MEMBER TRACKING CONFIDENTIAL INFORMATION STORAGE PART
- 503 MEMBER TRACKING MEANS
- 504 RANDOM NUMBER GENERATOR

**SIGNATURE DEVICE** | 2

- 201 FIRST RANDOM NUMBER GENERATOR
- 205 ENCRYPTED DATA CREATION MEANS
- 209 MESSAGE INPUT MEANS
- 213 REGISTRATION MEANS
- 202 SECOND RANDOM NUMBER GENERATOR
- 206 FIRST CONVERTED DATA CREATION MEANS
- 210 SIGNATURE OUTPUT MEANS
- 203 THIRD RANDOM NUMBER GENERATOR
- 207 SECOND CONVERTED DATA CREATION MEANS
- 211 CONFIDENTIAL INFORMATION STORAGE PART
- 214 FIFTH RANDOM NUMBER GENERATOR
- 204 FOURTH RANDOM NUMBER GENERATOR
- 208 KNOWLEDGE SIGNATURE CREATION MEANS
- 212 MEMBER INFORMATION STORAGE PART

**VERIFICATION DEVICE** | 3

- 301 VERIFICATION MEANS

EP 1 710 954 A1

**FIG. 4**

# FIG. 5

MEMBER MANAGEMENT DEVICE

401
DISCRETE LOGARITHM KEY GENERATION MEANS

402
MEMBER REGISTRATION CONFIDENTIAL INFORMATION STORAGE PART

405
SECOND RANDOM NUMBER GENERATOR

403
MEMBER REGISTRATION MEANS

4

GROUP MANAGEMENT DEVICE

101
PUBLIC INFORMATION DISCLOSING MEANS

102
MEMBER INFORMATION DISCLOSING MEANS

1

2

SIGNATURE DEVICE

214
FIFTH RANDOM NUMBER GENERATOR

213
REGISTRATION MEANS

212
MEMBER INFORMATION STORAGE PART

211
CONFIDENTIAL INFORMATION STORAGE PART

EP 1 710 954 A1

# FIG. 6

# FIG. 7

MEMBER MANAGEMENT DEVICE (4)

- 401 DISCRETE LOGARITHM KEY GENERATION MEANS
- 402 MEMBER REGISTRATION CONFIDENTIAL INFORMATION STORAGE PART
- 404 FIRST RANDOM NUMBER GENERATOR
- 403 MEMBER REGISTRATION MEANS
- 405 SECOND RANDOM NUMBER GENERATOR

GROUP MANAGEMENT DEVICE (1)

- 101 PUBLIC INFORMATION DISCLOSING MEANS
- 102 MEMBER INFORMATION DISCLOSING MEANS

# FIG. 8

# FIG. 9

```
                    ┌──────────────┐
                    │    GROUP     │
                    │  SIGNATURE   │
                    └──────────────┘
                           │
                           ▼
```

5

┌─────────────────────────────────────────────┐
│ MEMBER TRACKING DEVICE                        │
│                                               │
│                                    503        │
│                       ┌──────────────┐        │
│                       │    MEMBER    │        │
│                       │   TRACKING   │◀───────│──────
│                       │    MEANS     │◀───────│──────
│                       └──────────────┘        │
│       501                  502                │
│  ┌──────────────┐   ┌──────────────┐          │
│  │   DISCRETE   │   │    MEMBER    │          │
│  │  LOGARITHM   │   │   TRACKING   │          │
│  │     KEY      │   │ CONFIDENTIAL │          │
│  │  GENERATION  │   │ INFORMATION  │          │
│  │    MEANS     │   │ STORAGE PART │          │
│  └──────────────┘   └──────────────┘          │
└─────────────────────────────────────────────┘

1

┌──────────────────────────────┐
│ GROUP MANAGEMENT              │
│      DEVICE                   │
│                       101     │
│          ┌──────────────┐     │
│          │    PUBLIC    │     │
│          │ INFORMATION  │     │
│          │  DISCLOSING  │     │
│          │    MEANS     │     │
│          └──────────────┘     │
│                       102     │
│          ┌──────────────┐     │
│          │    MEMBER    │     │
│          │ INFORMATION  │     │
│          │  DISCLOSING  │     │
│          │    MEANS     │     │
│          └──────────────┘     │
└──────────────────────────────┘

```
                    ┌──────────────┐
                    │    SIGNER    │
                    └──────────────┘
```

# FIG. 10

SIGNATURE DEVICE

PUBLIC INFORMATION

MEMBER MANAGEMENT DEVICE

A101 SELECT SIGNATURE KEY

A102 CREATE CONVERTED DATA FROM SIGNATURE KEY

CONVERTED DATA

KNOWLEDGE SIGNATURE

VERIFICATION DATA

A103 KNOWLEDGE SIGNATURE RELATED TO SIGNATURE KEY

A104 CREATE IDENTITY VERIFICATION DATA FOR SIGNATURE DEVICE

A105 ARE KNOWLEDGE SIGNATURE AND VERIFICATION DATA CORRECT?

NO

YES

MEMBER CERTIFICATE

A106 SELECT RANDOM NUMBER

A108 IS MEMBER CERTIFICATE CORRECT?

NO

YES

A107 CALCULATE MEMBER CERTIFICATE

A109 NOTIFY SUCCESS OF VERIFICATION

NOTIFICATION OF SUCCESS

A111 OUTPUT CONVERTED DATA, KNOWLEDGE SIGNATURE, MEMBER CERTIFICATE, AND VERIFICATION DATA TO MEMBER INFORMATION STORAGE PART

A110 STORE SIGNATURE KEY AND MEMBER CERTIFICATE

END

END

# FIG. 11

SIGNATURE
DEVICE

PUBLIC
INFORMATION

MESSAGE

SELECT FIRST, SECOND,
AND THIRD RANDOM
NUMBERS — A201

CREATE ENCRYPTED DATA FROM FIRST ELEMENT
OF MEMBER CERTIFICATE — A202

CREATE FIRST CONVERTED DATA FROM FIRST
ELEMENT OF MEMBER CERTIFICATE — A203

CREATE SECOND CONVERTED DATA FROM FIRST
ELEMENT OF MEMBER CERTIFICATE — A204

CREATE KNOWLEDGE SIGNATURE DATA — A205

OUTPUT MESSAGE, ENCRYPTED DATA, FIRST AND
SECOND CONVERTED DATA, AND KNOWLEDGE
SIGNATURE DATA — A206

END

# FIG. 12

FIRST MEMBER SUB-MANAGEMENT DEVICE — 6
- 601 DISTRIBUTED DISCRETE LOGARITHM KEY GENERATION MEANS
- 602 DISTRIBUTED REGISTRATION CONFIDENTIAL INFORMATION STORAGE PART
- 603 DISTRIBUTED MEMBER REGISTRATION MEANS
- 604 RANDOM NUMBER GENERATOR

SECOND MEMBER SUB-MANAGEMENT DEVICE — 7
- 701 DISTRIBUTED DISCRETE LOGARITHM KEY GENERATION MEANS
- 702 DISTRIBUTED REGISTRATION CONFIDENTIAL INFORMATION STORAGE PART
- 703 DISTRIBUTED MEMBER REGISTRATION MEANS
- 704 RANDOM NUMBER GENERATOR

THIRD MEMBER SUB-MANAGEMENT DEVICE — 8
- 801 DISTRIBUTED DISCRETE LOGARITHM KEY GENERATION MEANS
- 802 DISTRIBUTED REGISTRATION CONFIDENTIAL INFORMATION STORAGE PART
- 803 DISTRIBUTED MEMBER REGISTRATION MEANS
- 804 RANDOM NUMBER GENERATOR

SIGNATURE DEVICE — 2

GROUP MANAGEMENT DEVICE — 1
- 101 PUBLIC INFORMATION DISCLOSING MEANS
- 102 MEMBER INFORMATION DISCLOSING MEANS
- 103 PRE-PROCESSING MEANS

VERIFICATION DEVICE — 3

FIRST MEMBER SUB-TRACKING DEVICE — 9
- 901 DISTRIBUTED DISCRETE LOGARITHM KEY GENERATION MEANS
- 902 DISTRIBUTED TRACKING CONFIDENTIAL INFORMATION STORAGE PART
- 903 DISTRIBUTED MEMBER TRACKING MEANS
- 904 RANDOM NUMBER GENERATOR

SECOND MEMBER SUB-TRACKING DEVICE — 10
- 1001 DISTRIBUTED DISCRETE LOGARITHM KEY GENERATION MEANS
- 1002 DISTRIBUTED TRACKING CONFIDENTIAL INFORMATION STORAGE PART
- 1003 DISTRIBUTED MEMBER TRACKING MEANS
- 1004 RANDOM NUMBER GENERATOR

THIRD MEMBER SUB-TRACKING DEVICE — 11
- 1101 DISTRIBUTED DISCRETE LOGARITHM KEY GENERATION MEANS
- 1102 DISTRIBUTED TRACKING CONFIDENTIAL INFORMATION STORAGE PART
- 1103 DISTRIBUTED MEMBER TRACKING MEANS
- 1104 RANDOM NUMBER GENERATOR

EP 1 710 954 A1

## FIG. 13

## INTERNATIONAL SEARCH REPORT

| | International application No. |
|---|---|
| | PCT/JP2005/001177 |

A. CLASSIFICATION OF SUBJECT MATTER
    Int.Cl$^7$  H04L9/32, G09C1/00

According to International Patent Classification (IPC) or to both national classification and IPC

B. FIELDS SEARCHED

Minimum documentation searched (classification system followed by classification symbols)
    Int.Cl$^7$  H04L9/32, G09C1/00

Documentation searched other than minimum documentation to the extent that such documents are included in the fields searched
    Jitsuyo Shinan Koho          1922-1996   Toroku Jitsuyo Shinan Koho   1994-2005
    Kokai Jitsuyo Shinan Koho    1971-2005   Jitsuyo Shinan Toroku Koho   1996-2005

Electronic data base consulted during the international search (name of data base and, where practicable, search terms used)
    JICST FILE(JOIS), WPI, INSPEC(DIALOG)

C. DOCUMENTS CONSIDERED TO BE RELEVANT

| Category* | Citation of document, with indication, where appropriate, of the relevant passages | Relevant to claim No. |
|---|---|---|
| Y | Kozue Umeda, Atsuko Miyaji, "A Group Signature Scheme based on Nyberg-Ryeppel Signatures", 2003 Nen Ango to Joho Security Symposium Yokoshu, Vol.1 of 2, 26 January, 2003 (26.01.03), pages 327 to 332 | 1-12 |
| Y | Takamitsu KATO, Shoichi HIROSE, Michihiko MINO, Katsuo IKEDA, "ElGamal no Kokai Kagi Angokei ni Motozuku Group Shomei ni yoru Shomei Protocol", 1992 Nen The Institute of Electronics, Information and Communication Engineers - Soritsu 75 Shunen Kinen - Shuki Taikai Koen Ronbunshu, separate Vol.1, 15 September, 1992 (15.09.92), page 1·187 | 1-12 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
|     26 April, 2005 (26.04.05) |     17 May, 2005 (17.05.05) |

| Name and mailing address of the ISA/ | Authorized officer |
|---|---|
|     Japanese Patent Office | |
| Facsimile No. | Telephone No. |

Form PCT/ISA/210 (second sheet) (January 2004)

**EP 1 710 954 A1**

**INTERNATIONAL SEARCH REPORT**

International application No.

PCT/JP2005/001177

C (Continuation).    DOCUMENTS CONSIDERED TO BE RELEVANT

| Category* | Citation of document, with indication, where appropriate, of the relevant passages | Relevant to claim No. |
|---|---|---|
| P,X | Shoko YONEZAWA, Jun FURUKAWA, "Kanrisha Bunsan ni Tekishita Group Shomei Hoshiki", 2004 Nen Ango to Joho Security Symposium Yokoshu, Vol.2 of 2, 27 January, 2004 (27.01.04), pages 1167 to 1172 | 1-12 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Efficient Group Signatures without Trapdoors. **G. ATENIESE ; R. DE MEDEIROS.** In Advances in Cryptology---ASIACRYPT 2003. Springer-Verlag, 2003, vol. LNCS 289, 246-268
- **ELGAMAL.** A Public Key Cryptosystem and a Signature Scheme Based on Discrete Logarithms. *IEEE Trans. on Information Theory,* vol. IT-31,4, 469-472
- A Practical and Provable Secure Coalition-Resistant Group Signature Scheme. **G. ATENIESE ; J. CAMENISCH ; M. JOYE ; G. TSUDIK.** In Advances in Cryptology--CRYPTO2000. Springer-Verlag, 2000, vol. LNCS 188, 255-270
- A Method for Obtaining Digital Signatures and Public-Key Cryptosystems. *Communications of the ACM,* vol. 21 (2), 120-126
- **NYBERG ; RUEPPEL.** Message Recovery for Signature Schemes Based on the Discrete Logarithm Problem. *Advances in Cryptology - EUROCRYPT '94,* 182-193
- **SCHNORR.** Efficient Signature Generation by Smart Cards. *Journal of Cryptology,* vol. 4 (3), 161-174
- **PEDERSEN.** A Threshold Cryptosystem without a Trusted Party. *Advances in Cryptology-EUROCRYPT '91,* 522-526